# EUROPEAN PATENT SPECIFICATION

(11) **EP 0 942 868 B1**
(45) Date of publication and mention of the grant of the patent: **30.03.2005**
(21) Application number: 98942042.7
(22) Date of filing: 12.08.1998
(51) Int. Cl.: B65B 13/32

(54) **IMPROVED ULTRASONIC TIEING TOOL**
ULTRASCHALL-BINDEWERKZEUG
OUTIL A ULTRASONS AMELIORE DESTINE A LIER ENSEMBLE DES ARTICLES

(30) Priority: 12.08.1997 US 55593 P; 06.03.1998 WO PCT/US98/04358
(43) Date of publication of application: 22.09.1999
(73) Proprietor: Thomas & Betts International, Inc., Sparks, Nevada 89434 (US)
(72) Inventor: BARTHOLOMEW, Paul, J., Memphis, TN 38111 (US); STUDENTS, John, J., Collierville, TN 38017 (US); LOWERY, Gary, L., Southaven, MS 38671 (US); KHOKHAR, Wasim, Cordova, TN 38018 (US); BAILEY, Mark, A., Senatobia, MS 38668 (US); DORIAN, John, D., Olive Branch, MS 38654 (US); SEHLMEYER, John, A., Mount Sinai, NY 11766 (US); WELLS, Peter, M., Jr., Germantown, TN 38139 (US)
(74) Representative: Howick, Nicholas Keith
(86) International application number: PCT/US1998/016750
(87) International publication number: WO 1999/007604

(56) References cited:
- WO-A-98/39159
- GB-A- 1 135 024
- US-A- 3 552 305
- US-A- 4 265 687
- US-A- 4 534 817
- US-A- 4 842 671
- US-A- 5 509 994

## Description

This application claims priority to International Application PCT/US98/04358 filed March 6, 1998 and claims priority to U.S. Provisional Application No. 60/055,593 filed August 12, 1997.

### BACKGROUND OF THE INVENTION

The present invention relates to a tool for applying a weldable tape about a bundle of elongate articles and, more particularly, to an improved tool and method for securing the tape about the articles without loss of tension in the tape and without leaving an unsecured loose end or a protruding sharp edge adjacent the weld.

Various techniques exist for bundling elongate articles such as wires, cables or the like. One preferred technique for bundling a plurality of elongate articles involves the feeding of a weldable tape about the bundled articles until the tape overlaps itself, tensioning the tape about the bundle of articles and thereafter welding the tape at the location of the overlap to provide a tensioned loop which secures the bundle of articles. The tensioned loop is then cut free from the remaining stock of tape so that the tool can be removed from the first bundle of articles and moved to a second location to secure a second portion of tape about a second bundle of articles. Document US 5 509 994 describes a tool according to the preamble of claim 1.

The disadvantage associated with prior art tools is the inability of such tools to both properly feed the tape to the jaws of the tool without jamming and to adequately tension the tape prior to welding. In this regard, prior art tools often experience tape slippage during the tensioning stage of the bundling operation. This is, the tape drive mechanism loses its grip on the tape prior to the proper level of tensioning being achieved in the tape. There is therefore a need in the art for a tieing tool which additionally provides adequate tensioning of the weldable tape during the tensioning stage of the bundling operation, while also providing reliable and efficient tape transfer during the tape advancement stage of the bundling operation.

The prior art tools accomplish the welding and cutting operations in various ways, all of which have disadvantages. Certain prior art tools are disclosed in U.S. Patent Nos. 4,265,687, 4,534, 817 and 5,062,920. A first group of prior art tools are configured to both weld and cut the tape at the same location. This technique often results in loosening of the tape about the bundle of articles (i.e., loss of tension) because the cutting portion of the bundling operation may adversely effect and/or weaken the ultrasonic weld which has been previously applied to the tape. Weakening of the weld thus allows the tape to stretch and lose its tension about the bundle of articles. A second group of prior art tools locate the cutting element a distance from the weld location so as not to weaken the weld. These tools, however, leave a loose end of tape adjacent the weld following the cutting operation which is undesirable (and many times unacceptable) in various installations. Certain other prior art tools rely on a technique whereby a portion of the tape is weakened during the welding operation such that the application of tension to the tape following the welding operation severs the tensioned loop tape from the stock of tape. However, the repeatability of such a technique is often inconsistent and, the technique often leaves a ragged loose end adjacent the weld.

There is therefore a need in the art for a tieing tool which can readily bundle a plurality of elongate articles by applying a weldable tape thereabout, tensioning such tape, welding the tensioned loop at the location of the overlap and thereafter severing the welded tensioned loop from the stock of tape without weakening the weld (which allows loss of tension in the bundle of articles) or leaving an unsecured loose end or a protruding sharp edge adjacent the weld which is undesirable and/or unacceptable in various installations.

### SUMMARY OF THE INVENTION

The present invention, which addresses the needs of the prior art, relates to an ultrasonic tieing tool for applying a weldable tape about a bundle of elongate articles according to claim 1. The tool includes a housing having a body and a handle. The tool further includes a jaw assembly cooperating with the body and configured to grasp the elongate articles whereby the tape may be looped about the articles. The tool also includes an ultrasonic horn supported within the body and including a welding tip located proximate the jaw assembly. The tool additionally includes at least one anvil located to cooperate with the welding tip and adapted for manipulating a portion of the weldable tape bearing thereagainst. Finally, the tool includes a belt drive mechanism for advancing the tape to the jaw assembly and for tensioning the tape following looping of the tape about the articles. The mechanism include a drive belt and a drive housing surrounding at least a portion of the belt, the drive housing defines at least one guide channel for passage of the tape therethrough. The belt defines at least one wall of the passage. Finally, the passage is dimensioned to resist out-of-plane buckling of the tape as the tape is advanced therethrough.

In a preferred embodiment the tool includes a housing having a body and a handle. The tool further includes a jaw assembly cooperating with the body and configured to grasp the elongate articles whereby the tape may be looped about the articles. The tool also includes an ultrasonic horn supported within the body and including a welding tip located proximate the jaw assembly. The tool additionally includes at least one anvil located to cooperate with the welding tip and adapted for manipulating a portion of the weldable tape bearing thereagainst. The tool further includes a tape drive mechanism for advancing the tape to the jaw assembly and for tensioning the tape following looping of the tape about the articles. The jaw assembly includes at least one moveable jaw. The tool also includes a trigger operatively connected to the movable jaw. The trigger is mounted on the handle and moveable between a standby position and an actuated position. The tool further includes a control linkage movably mounted with respect to the tool housing and movable between a first position and a second position. The tool also includes first and second control rods having first and second ends respectively. The first rod extends between the trigger and the linkage whereby movement of the trigger from the standby position to the actuated position causes the first rod to pivot the linkage from the first position to the second position. The second rod extends between the linkage and the movable jaw whereby pivoting of the linkage from the first position to the second position causes the second rod to move the movable jaw from an open position to a closed position. The linkage is biased to the first position. The tool further includes a locking mechanism for holding the linkage in the second position following actuation of the trigger. The tool additionally includes a releasing mechanism for releasing the locking mechanism following welding of the tape about the articles whereby the linkage pivots to the first position causing the second rod to move the movable jaw to the open position.

In a preferred embodiment the tool includes a housing having a body and a handle. The tool further includes a jaw assembly cooperating with the body and configured to grasp the elongate articles whereby the tape may be looped about the articles. The tool also includes an ultrasonic horn supported within the body and including a welding tip located proximate the jaw assembly. The tool additionally includes at least one anvil located to cooperate with the welding tip and adapted for manipulating a portion of the weldable tape bearing thereagainst. Finally, the tool includes a tape drive mechanism for advancing the tape to the jaw assembly and for tensioning the tape following looping of the tape about the articles. The mechanism includes a drive wheel and a cooperating spring loaded pad for gripping the tape extending therebetween. The pad is pivotable between a tape feeding position and a tape tensioning position. Finally, the pad is configured to pivot to the tape tensioning position upon increase of tension in the tape.

Finally, in a preferred embodiment the tool includes a housing having a body and a handle. The tool further includes a jaw assembly cooperating with the body and configured to grasp the elongate articles whereby the tape may be looped about the articles. The tool also includes an ultrasonic horn supported within the body and including a welding tip located proximate the jaw assembly. The tool additionally includes at least one anvil located to cooperate with the welding tip and adapted for manipulating a portion of the weldable tape bearing thereagainst. Finally, the tool includes a belt drive mechanism for advancing the tape to the jaw assembly and for tensioning the tape following looping of the tape about the articles. The mechanism includes a pair of cooperating wheels for advancement of the tape therebetween. Each of the wheels is directly driven by the tool whereby increased gripping of the tape by the wheels is accomplished.

As a result, the present invention provides an ultrasonic tieing tool which can readily bundle a plurality of elongate articles by applying a weldable tape thereabout, tensioning such tape, welding the tensioned loop at the location of the overlap and thereafter severing the welded tensioned loop from the stock of tape without weakening the weld (which allows loss of tension in the bundle of articles) or leaving an unsecured loose end or a protruding sharp edge adjacent the weld. The present invention further provides an ultrasonic tieing tool which provides adequate tensioning of the tape without tape slippage during the tensioning stage of the bundling operation, while also providing reliable and efficient tape transfer during the tape advancement stage of the bundling operation.

### BRIEF DESCRIPTION OF THE DRAWINGS

Figure 1 is a perspective view of a prior art tool
Figure 2 is an elevational view of the tool of Figure 1 with a portion of the housing removed;
Figure 3 is a view similar to Figure 2 showing a tape-supplying cartridge secured to a rearward portion of the tool;
Figure 4 is an enlarged detail of the tape-supplying cartridge of Figure 3;
Figure 4a is an exploded perspective view of the tape-supplying cartridge;
Figure 4b is an elevational view of the tape-supplying mechanism of the present tool;
Figure 5 is a perspective view of a tool subassembly removed from the housing;
Figure 5a is an enlarged detail of the horn assembly of Figure 5;
Figure 6 is a perspective view of the subassembly including the anvils and clamping block;
Figure 7 is a perspective view showing the ultrasonic horn subassembly;
Figure 8 is an elevational view of the ultrasonic horn with the welding tip in its untilted, welding position;
Figure 9 is an elevational view of the ultrasonic horn with the welding tip in its tilted, cutting/tack welding position;
Figure 10 is an enlarged detail of the welding/cutting operation;
Figure 11 is an enlarged detail showing the welded tensioned loop cut free from the stock of tape;
Figure 12 is an enlarged detail of the welded distal end of the tape;
Figure 13 is a plan view showing the anvils in a home position;
Figure 14 is a plan view showing the anvils in a guide position;
Figure 15 is a plan view showing the anvils in a clamp position;
Figure 16 is a plan view showing the anvils in a weld position;
Figure 17 is a plan view showing an alternative embodiment of the anvil arm;
Figure 18 is an alternative embodiment of the jaw assembly;
Figure 19 is an elevational view of an alternative tool with a portion of the housing removed;
Figure 20 is a view similar to Figure 19 showing a tape-supplying cartridge secured to a rearward portion of the tool;
Figure 21 is an exploded perspective view of the tape-supplying cartridge of Figure 20;
Figure 22 is an enlarged detail of the tape-supplying cartridge and belt drive mechanism of the tool of Figure 19;
Figure 23 is an exploded perspective view of the belt drive mechanism of the tool of Figure 19, according to the invention.
Figures 24-25 are enlarged details of the jaw actuating assembly of the tool of Figure 19;
Figure 26 is an enlarged detail of an alternative tape-supplying cartridge including a trap door;
Figure 27 is an enlarged detail of another alternative tape-supplying cartridge;
Figure 28 is an enlarged detail of still another alternative tape-supplying cartridge;
Figure 29 is an enlarged perspective view of an alternative tape drive mechanism; and
Figure 30 is an enlarged cross-section of a V-shaped weldable tape.

### DETAILED DESCRIPTION OF THE INVENTION

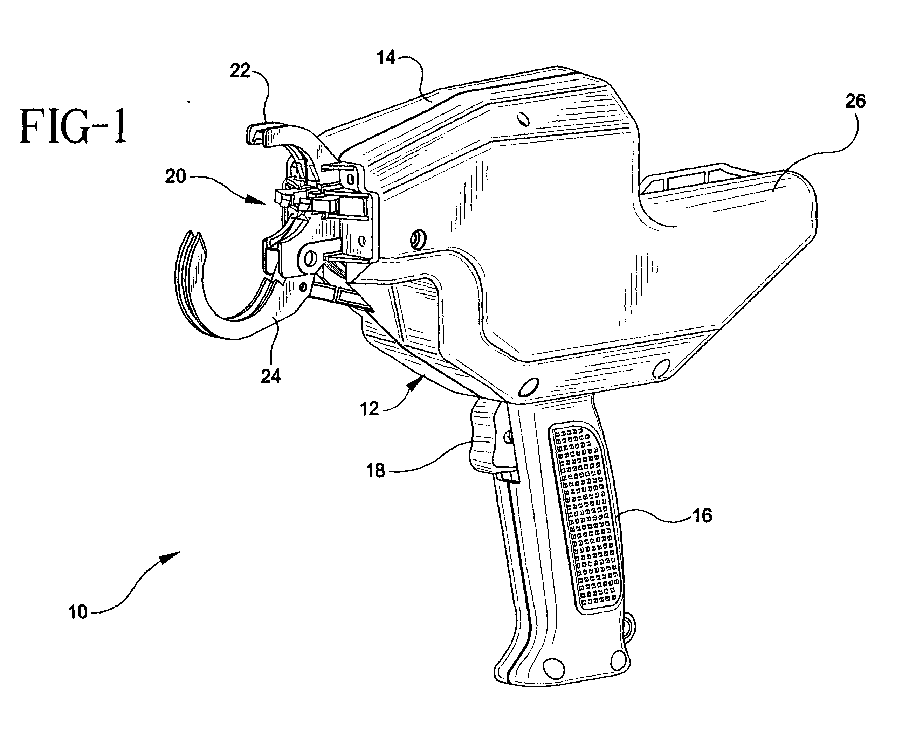

Referring now to the drawings, Figure 1 shows an ultrasonic tieing tool 10. Tool 10 includes a generally pistol-shaped housing 12, the housing including a body 14 and a handle 16. A trigger 18, for operating the tool, is provided on handle 16. A jaw assembly 20 is provided on a forward end of tool 10. Jaw assembly 20 includes an upper stationary jaw 22 and a lower movable jaw 24. The rear portion of body 14 includes a cartridge mounting interface 26 and a drive/guide wheel 28 rotatably mounted to housing 12.

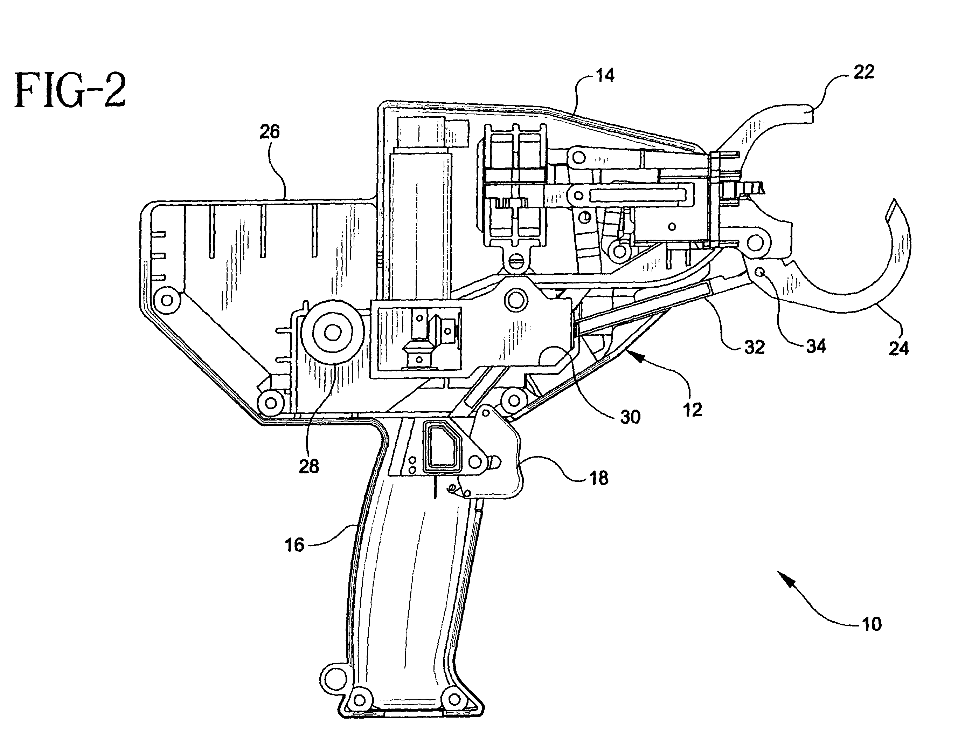

As best seen in Figure 2, tool 10 includes a mounting platform 30 for supporting a number of tool components (as discussed further hereinbelow). Mounting platform 30, in turn, cooperates with housing 12 to allow assembly of the tool components therein. In this regard, housing 12 is preferably formed with a platform-receiving structure which receives and secures platform 30 within such housing.

Tool 10 further includes a jaw-actuating rod assembly 32 for moving lower movable jaw 24 between an open position to allow insertion of a bundle of elongate articles therein and a closed position for securement of a weldable tape thereabout. A first end of rod assembly 32 is pivotably connected to jaw 24 via pin 34, while the other end of the rod assembly (not shown) communicates with a link (not shown), which in turn communicates with trigger 18. Thus, squeezing of trigger 18 closes jaw 24, while release of trigger 18 opens jaw 24.

Squeezing of trigger 18 also operates a switch (not shown) electrically communicating with a control mechanism (not shown). As will be recognized by those skilled in the art, the control mechanism may, for example, include a programmed microchip contained internally within the tool or external to the tool (e.g., the microchip and power supply could be combined together into one unit). The control mechanism provides power and/or instructions to the components of the tool at the appropriate points during the bundling operation.

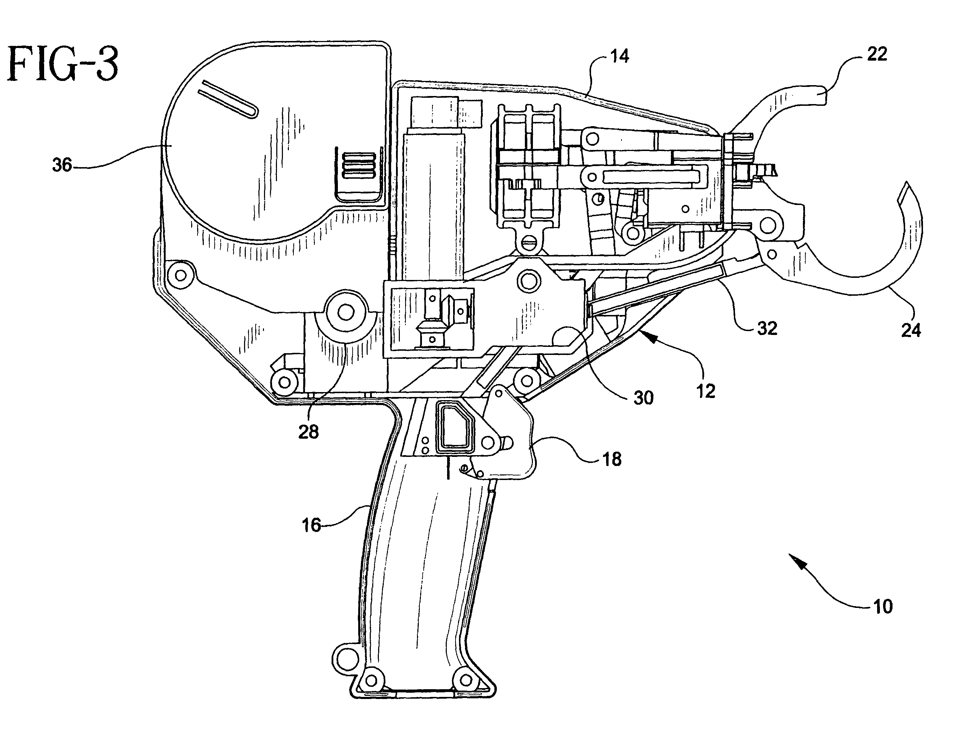

Referring now to Figure 3, tool 10 is configured to receive and cooperate with a tape-supplying cartridge 36. Cartridge 36 is sized and configured to cooperate with and mount to cartridge-mounting interface 26 of housing 12. As will be discussed in more detail hereinbelow, cartridge 36 contains a fixed length of tape wound on a spool. The cartridge has various features which ensure reliable feeding of the tape from the spool to the ultrasonic tieing tool. The cartridge is designed as a disposable item such that the cartridge is discarded once all the tape contained therein has been used. In this regard, the cartridge is formed of a two-piece molded plastic housing, the halves of the housing being bonded together in a press-fit assembly. Air vents are provided in the molded portions of the cartridge housing to allow air to escape during the press-fit operation. As the cartridge is designed to be disposable, once the cartridge housing has been assembled, re-opening of the same destroys such housing. The disposable design of cartridge 36 thus ensures that quality control with respect to the tape supply can be maintained.

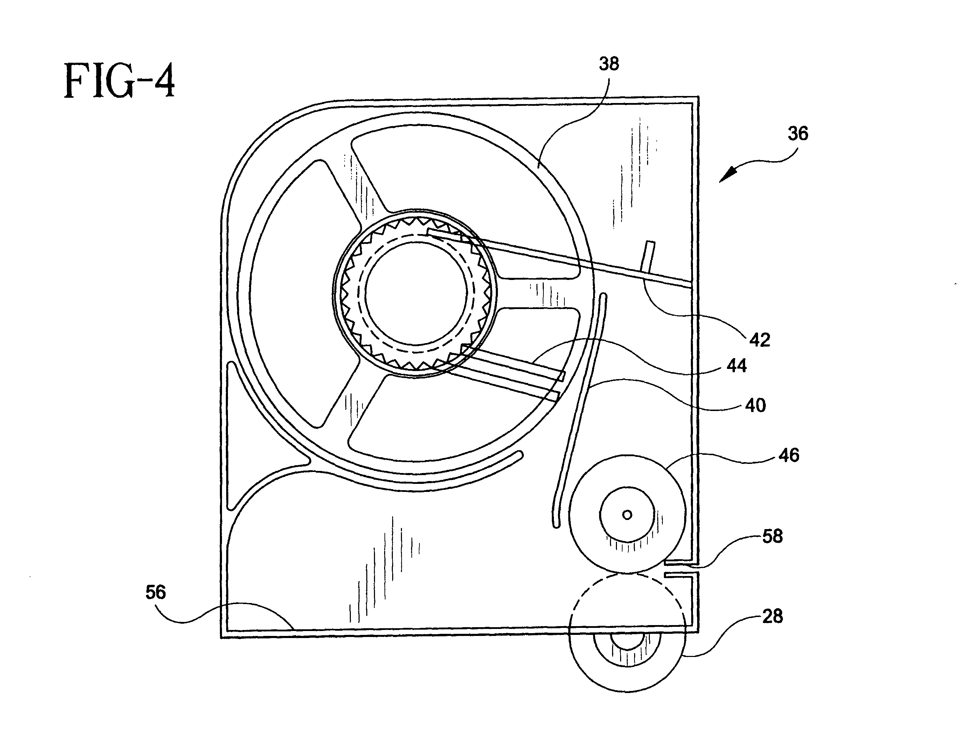

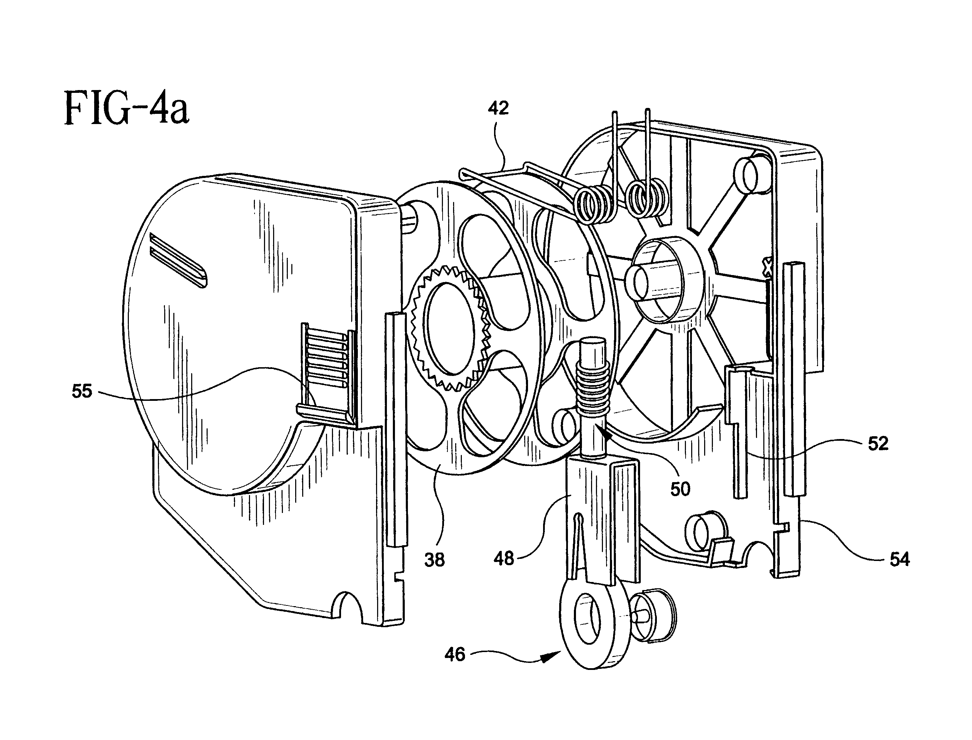

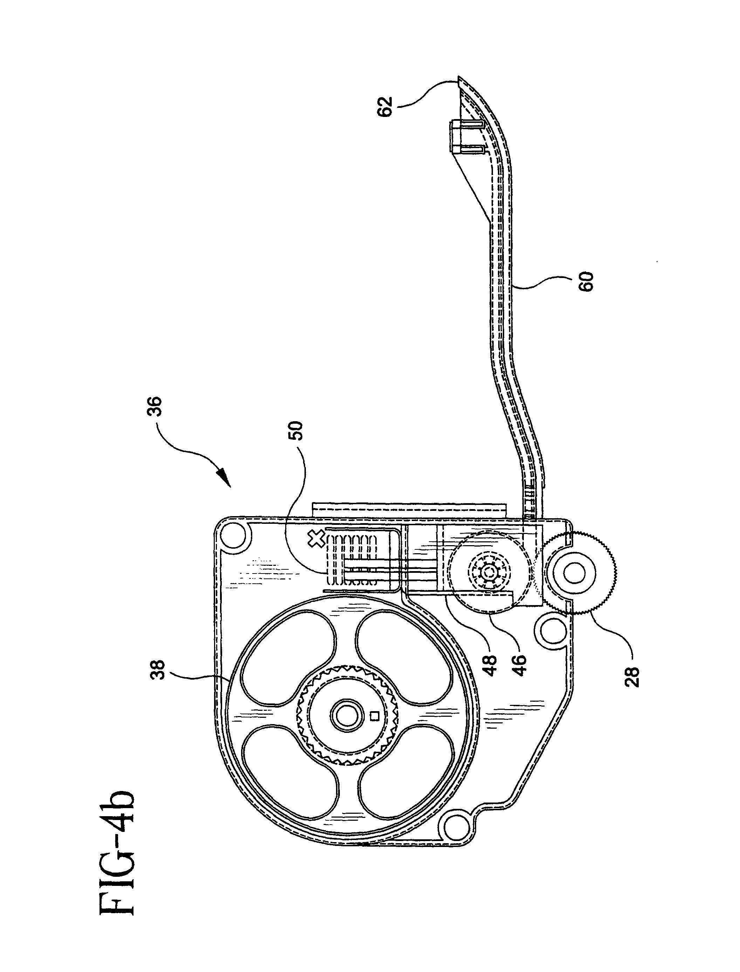

As best shown in Figure 4, cartridge 36 includes a spool 38 for winding of a weldable tape 40 thereabout. Tape 40 may be formed from any suitable weldable material, e.g., polyester. A spring 42 ensures that the tape remains coiled tightly about the spool. A ratchet mechanism 44 limits rotation of the spool to a single direction, thus preventing loosening and/or unwinding of the tape from the spool. The cartridge 36 further includes a pinch/guide wheel 46 rotatably mounted thereto and positioned to contact and cooperate with drive/guide wheel 28 mounted on housing 12. The interaction of the pinch-guide wheels is preferably accomplished by spring loading at least one of the wheels.

For example, pinch/guide wheel 46 may be spring loaded within cartridge 36 such that securement of cartridge 36 to housing 12 of the tool forces wheel 46 into engagement with wheel 28. As shown in Figure 4a, a wheel guide 48 and a spring assembly 50 may be utilized to accomplish the spring loading of pinch/guide wheel 46. As shown, wheel guide 48 is sized to cooperate with a track 52 formed in housing 54 of cartridge 36. Housing 54 preferably includes a guide strip 53 for positioning the cartridge with respect to the tool and a snap-lock connector 55 for securing the cartridge to the tool. Assembly of the mentioned components is shown in Figure 4b.

Cartridge 36 includes a slack take-up region 56 for receipt of excess tape during the tensioning process. During this stage of the bundling operation, the direction of rotation of drive/guide wheel 28 is reversed (from clockwise rotation to counter-clockwise rotation) to tension the tape looped about the bundle of articles in the jaw assembly of the tool. The excess tape is thus pulled into housing 54 and received within slack take-up region 56.

Cartridge 36 further includes an exit chute 58 for exit of tape 40 from the cartridge and into the tool. This exit chute may be configured with a trap door which closes following complete dispensing of the tape from the cartridge.

Referring now to Figure 4b, tool 10 includes a tape track 60 for guiding the tape exiting from the cartridge through the tool. In this regard, track 60 includes a track exit 62 which cooperates with a second tape track 63 to be discussed further hereinbelow. Tape track 60 is one continuous track which provides one continuous passage from chute 58 to track exit 62. The tape passage, which is located within the tape track, is preferably dimensioned as to provide a passageway with little clearance between the tape and track. This ensures that the tape does not buckle as it is fed forward through the track.

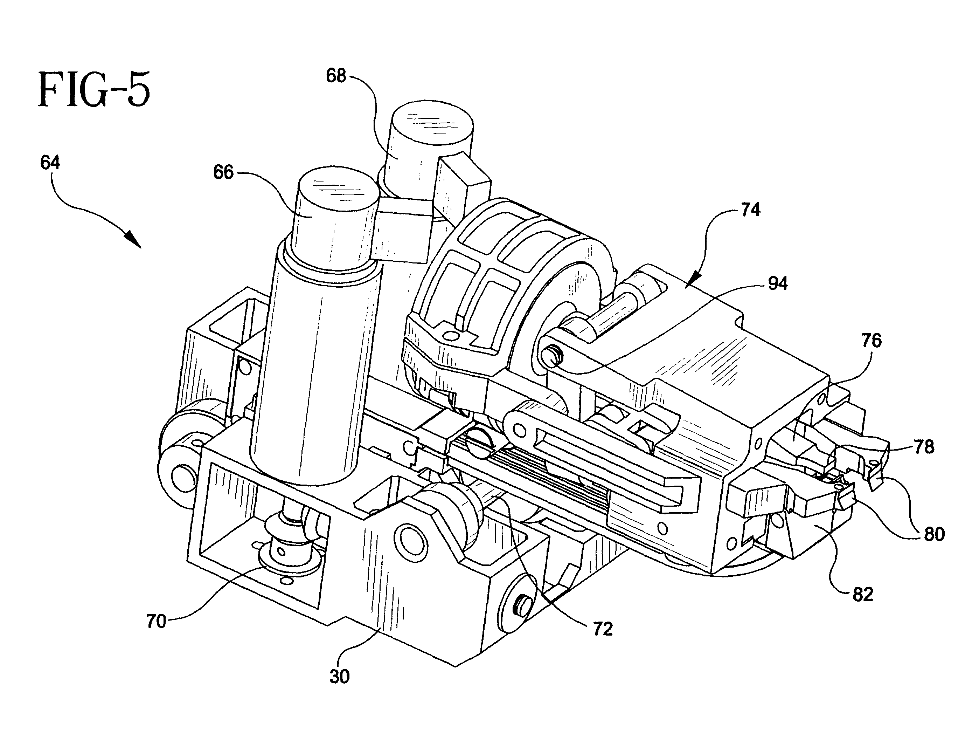

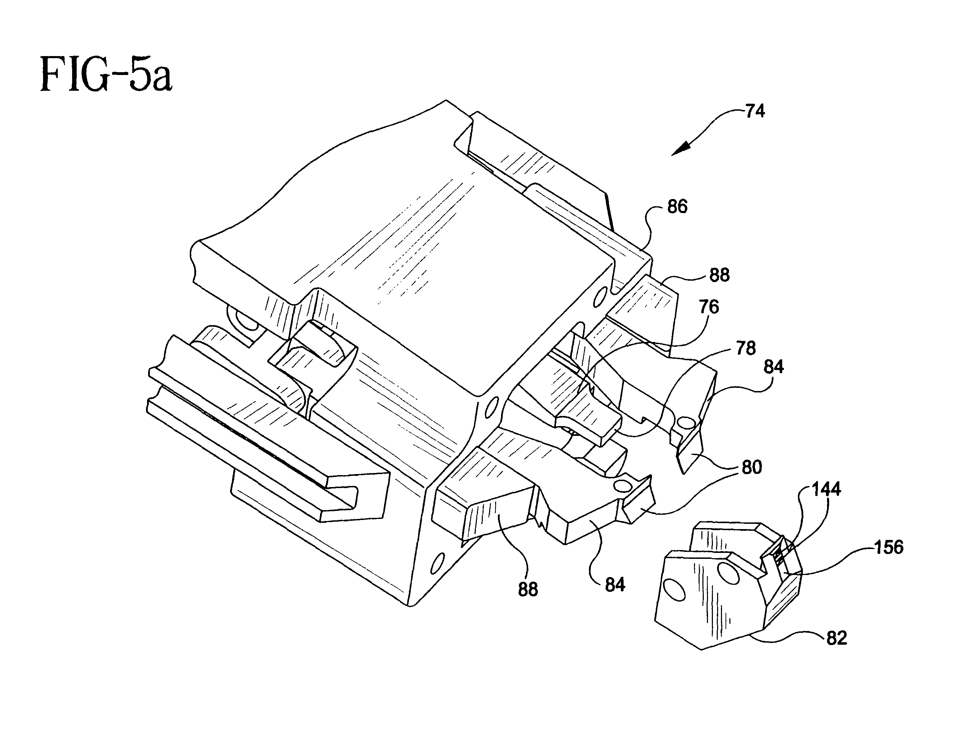

Referring now to Figure 5, a tool subassembly 64 is shown removed from housing 12. The subassembly 64 includes mounting platform 30 which supports a first motor 66 and a second motor 68. The first motor 66 cooperates with a gear assembly 70 for driving a crank shaft 72. The second motor 68 cooperates with a tape drive mechanism (not shown). The tape drive mechanism includes drive/guide wheel 28 and is designed to withdraw tape from cartridge 36 during the binding operation, and to tension the tape by withdrawing tape into slack take-up region 56 during the tensioning operation.

Subassembly 64 further includes horn assembly 74. In turn, horn assembly 74 includes ultrasonic horn 76 having an ultrasonic welding tip 78. Horn assembly 74 further includes a pair of movable anvils 80. Ultrasonic horn assembly 74 additionally includes a clamping block 82. The foregoing mentioned elements are shown in greater detail in Figure 5a. Clamping block 84 has been exploded away from horn assembly 74 for purposes of clarity.

Anvils 80 are formed on the distal portion of a pair of opposing arms 84. Housing 86 of horn assembly 74 is configured to allow reciprocal motion of arms 84 therein. In this regard, housing 86 includes a pair of opposing guide blocks 88 which urge anvils 80 towards one another as the arms are withdrawn into housing 86. As will be discussed in further detail hereinbelow, arms 84 are formed with flexible hinge portions which tends to urge arms 84 outward once the distal portion of the arms have been extended beyond guide blocks 88.

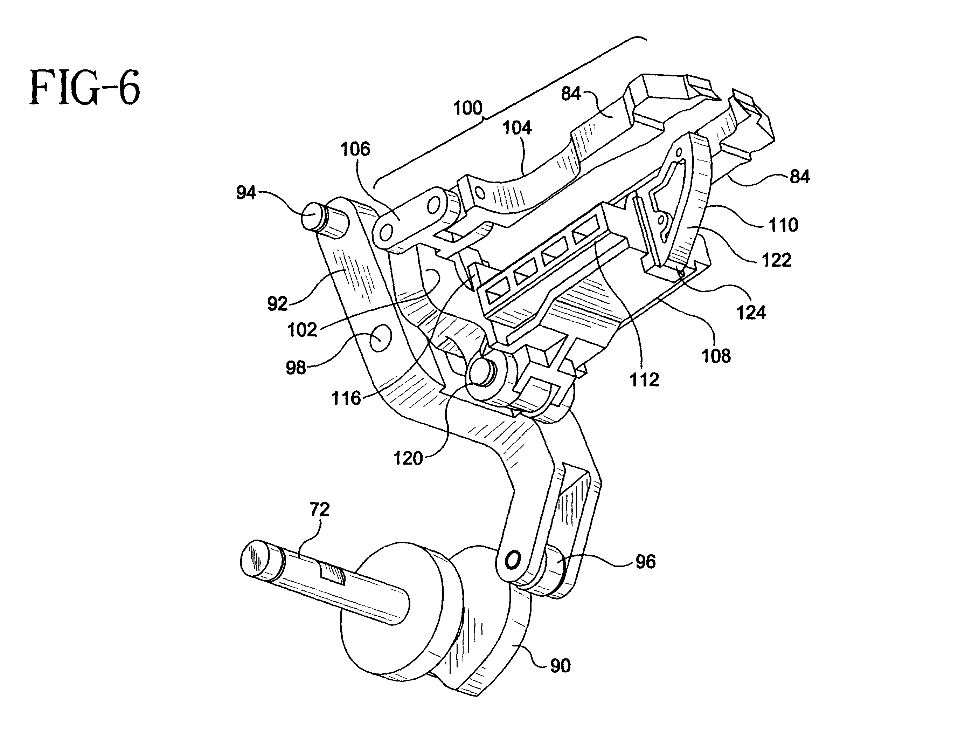

Referring now to Figure 6, crank shaft 72 includes a cam 90 having a plurality of eccentric surfaces thereon. Horn assembly 74 includes a lever 92 which pivotally mounts to housing 86 about pin 94. Lever 92 includes a guide wheel 96 which follows the eccentric surfaces located on cam 90. A spring (not shown) is utilized to urge lever 92 clockwise about pin 94 such that guide wheel 96 follows and remains in contact with cam 90. Lever 92 further includes a roller 98 which contacts and imparts translational movement to anvil subassembly 100.

In turn, anvil subassembly 100 includes arm 102 which contacts and thus cooperates with roller 98. However, anvil subassembly 100 is not directly connected to lever 92. Rather, contact between lever 92 and anvil subassembly 100 is limited to the physical contact of roller 98 and a rearward surface of arm 102.

As shown, anvil arms 84 include a flexible hinge portions 104 which allow flexing of the distal end of the arm during translational movement within housing 86. Anvil arms 84 are connected to arm 102 via a coupling 106.

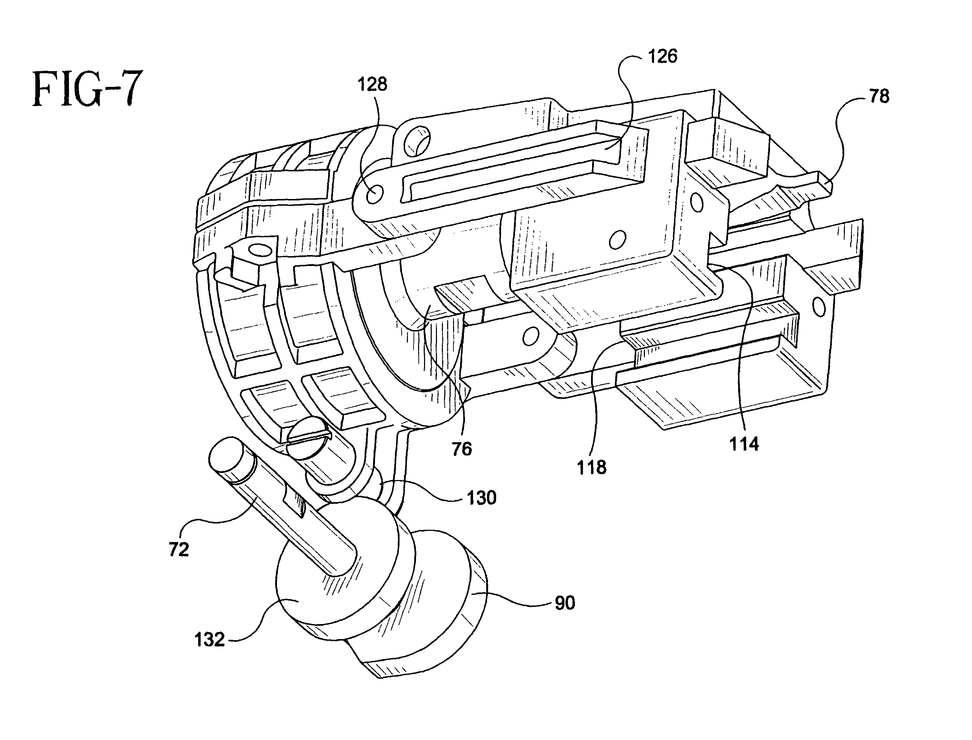

Anvil subassembly 100 further includes a block assembly 108 having a mounting bracket 110 located on a distal end thereof. Block assembly 108 includes an extending tongue 112 which cooperates and slides within a groove 114 formed in housing 86 (see Figure 7). Block assembly 108 includes a stop flange 116 configured to cooperate and contact rearward surface 118 of groove 114, thereby preventing any further forward translational movement of block assembly 108 within housing 86. Block assembly 108 is connected to arm 102 via pin assembly 120.

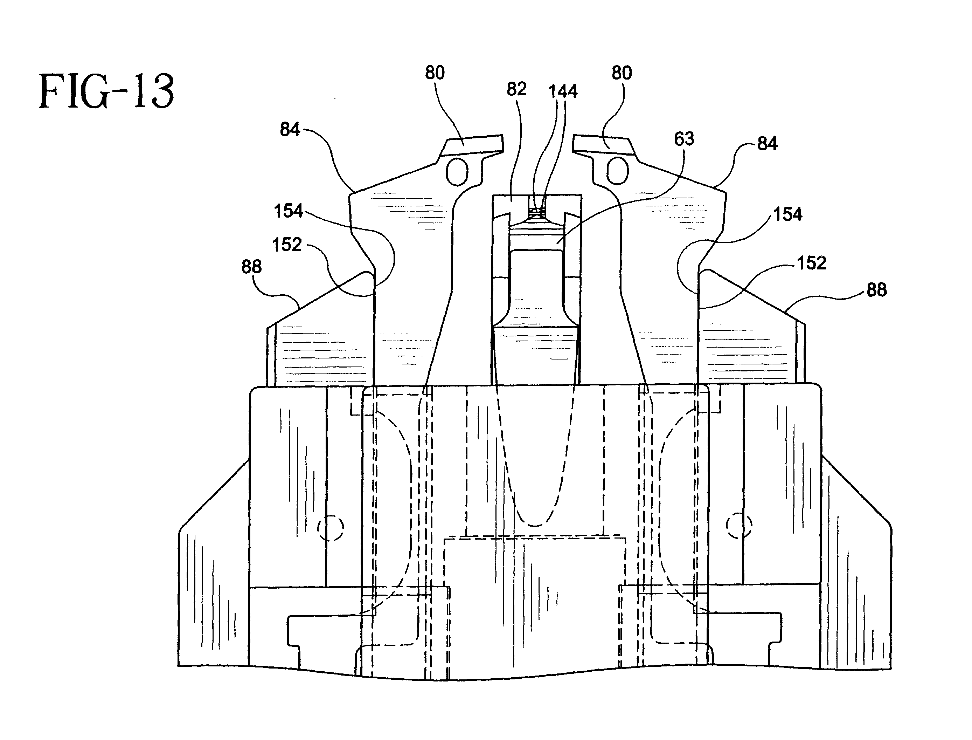

Clamping block 82 is configured to surround mounting bracket 110 and be fixed thereto. When clamping block 82 is mounted to mounting bracket 110, the forward most portion of the tape track (i.e., second tape track 63 shown in Figures 13-14) is formed therebetween. Particularly, surface 122 of mounting bracket 110 forms one wall of the tape track 63, while an interior surface of the clamping block 82 forms the opposing wall of tape track 63. Track exit 62 of tape track 60 cooperates with an entry region 124 of mounting bracket 110. Although the translational movement of block assembly 108 with respect to housing 86 is relatively small, the interface between track exit 62 of tape track 60 and entry region 124 defined by the bracket/clamping block arrangement must provide sufficient tolerance to allow this movement.
Entry region 124 is formed with a funnel shape to facilitate the feeding of the tape into second tape track 63. Accordingly, as guide wheel 96 follows cam 90, translational movement of anvil arms 84 and block assembly 108 is accomplished.

As will be discussed further hereinbelow, the tool of the present invention overcomes certain disadvantages associated with prior art tools in that the present tool is capable of securing a tape about a bundle of elongate articles and thereafter welding and cutting the tape without loss of tension in the bundled articles and without leaving a loose cut end of tape adjacent the weld, such loose end forming a sharp edge or burr. In one preferred embodiment, the ultrasonic horn of the tool includes a tilting mechanism which allows the ultrasonic horn to be positioned in a first location for welding the overlapped tensioned tape to itself to secure the looped tape about the elongate articles and a second location which allows the horn to be displaced a distance from the weld for simultaneous ultrasonic cut-off and tack-down of the loose end of the tape. Thus, ultrasonic energy is applied at two successive instances: first to weld the overlapped tape to secure the tensioned loop about the elongate articles, and second to cut the tensioned loop free from the stock of tape and tack weld the cut-off loose end to the underlying tape, thus eliminating any unsecured loose ends or protruding sharp edges. It is contemplated herein that other two step welding operations may be suitable for securing a weldable tape about a bundle of elongate articles. For example, the ultrasonic horn may undergo movement other than rotation to produce the displacement of the welding tip or more than one welding tip could be utilized.

The tilting mechanism of the present tool is explained with reference to Figure 7. Horn assembly 74 includes a pair of opposing grooves 126 which cooperate with a pair of opposing tongues (not shown) formed on the interior of housing 12, thereby locating and fixing horn assembly 74 within housing 12. When located within housing 12, housing 86 of horn assembly 74 is fixed with respect to housing 12. The ultrasonic welding horn 76 is pivotally mounted to housing 86 via pivot pin 128. Horn 76 includes a rotatably mounted guide wheel 130 located at the end opposite welding tip 78. Guide wheel 130 follows an eccentric cam 132. Cam 132 includes a single eccentric surface which pivots horn 76 about pin 128 between a welding position and a cutting/tack welding position.

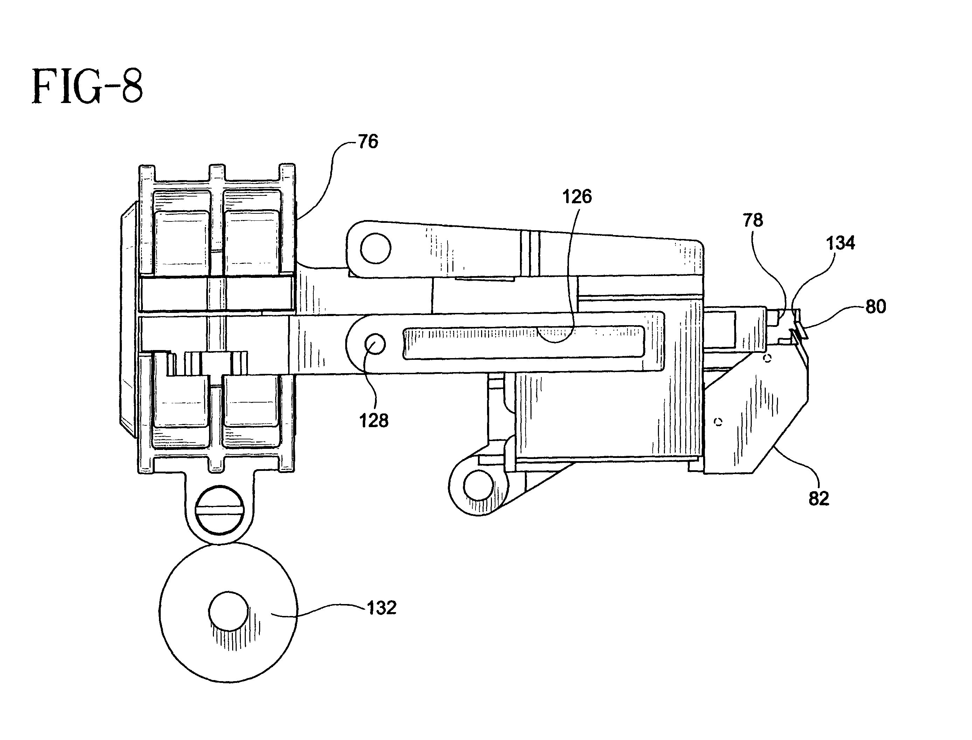

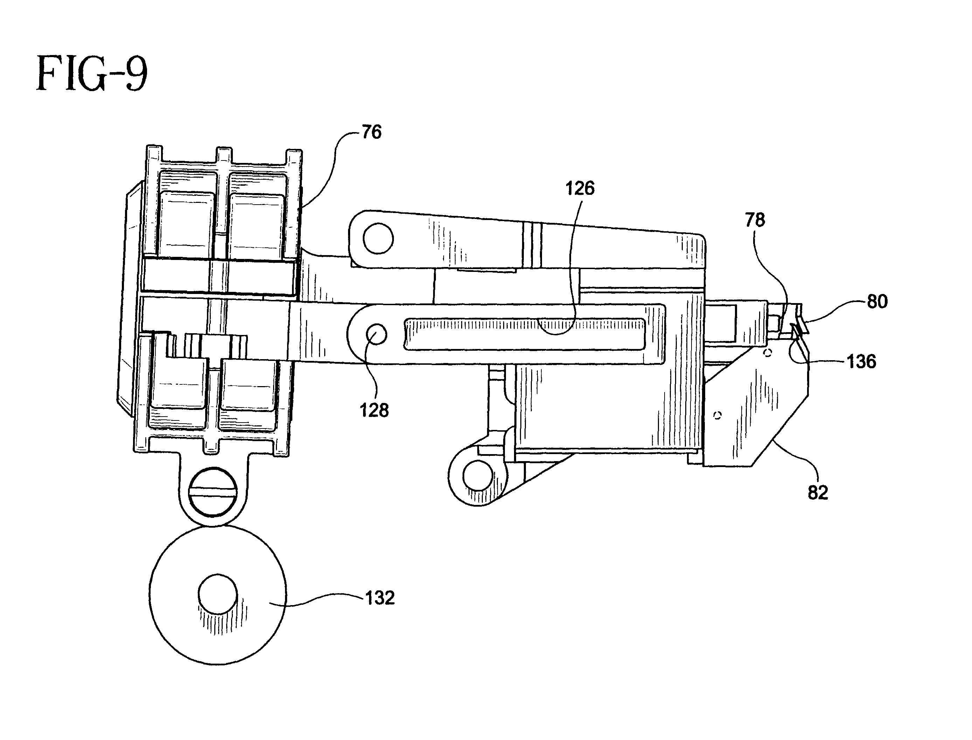

Referring now to Figure 8, ultrasonic horn 76 is shown in its welding position. In this position, tip 78 is aligned with a first vertically extending rearward portion 134 of anvil 80. It is to be noted that a horizontal axis passing through pin 128 is spaced a distance below a horizontal axis passing through the center of ultrasonic horn 76. In this fashion, as tip 78 is rotated about pivot pin 128, the movement of tip 78 with respect to anvil 80 is substantially vertically downward. As shown in Figure 9, ultrasonic horn 76 is pivoted about pivot pin 128 when guide wheel 130 contacts the eccentric portion of cam 132. This pivoting movement translates tip 78 substantially vertically downward such that tip 78 is located adjacent cutting edge 146, with tape 40 positioned therebetween.

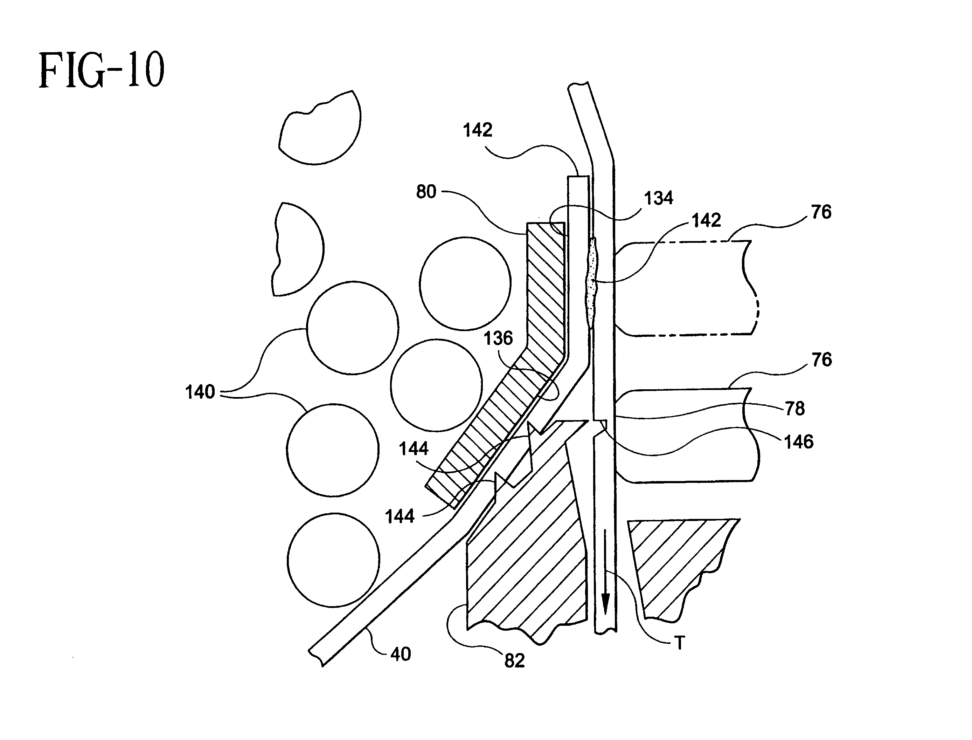

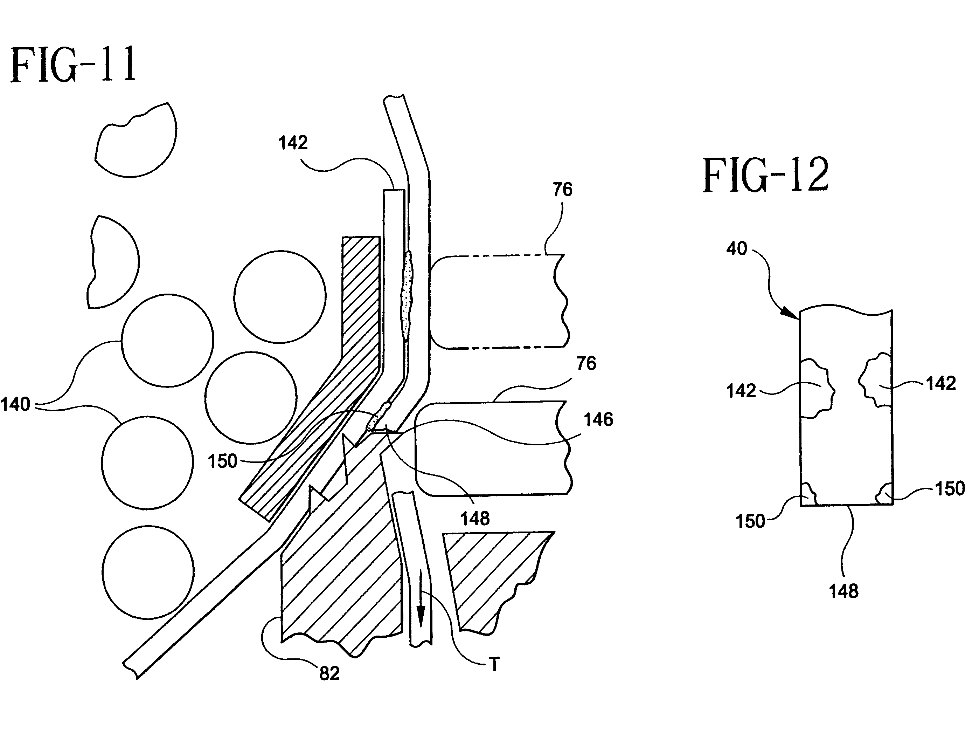

Referring now to Figure 10, tape 40, which is looped about a plurality of wires 40, has a leading free end 142 and a trailing end connected to the stock of the tape contained in the cartridge. Horn 76 is shown in phantom opposite primary weld 142. After the overlapped tapes are secured to one another via weld 142, horn 76 is rotated about pivot pin 128 such that welding tip 78 is displaced vertically downward such that the tip is adjacent to clamping block 82. Clamping block 82 includes a plurality of teeth 144 which bite into and hold tape 40 thereagainst. Clamping block 82 further includes a cutting edge 146. Operation of the ultrasonic horn in this vertically displaced location forces tape 40 against cutting edge 146, thereby cutting the welded tensioned loop from the stock of tape contained in the cartridge. During the welding and cutting operations, tension is maintained in the tape in the direction of arrow T. As shown in Figure 11, the welded tensioned loop has been cut free from the stock of tape. As distal end 148 of tape 140 is cut free from the stock of tape, it is simultaneously tack welded at its outer edges via ultrasonic horn 76.

To ensure that the looped tape remains in a tensioned state during the welding operation, welding horn 76 is configured as to form two primary welds 142 (see Figure 12) without welding entirely across the width of the tape. It will be recognized by those skilled in the art, that welding entirely across the width of the tape allows the tape to lose its tension during such operation. The second tack welding operation also produces two tack welds, i.e., welds 150, which secure distal end 148 of the tape to the underlying tape of the tensioned loop, thereby eliminating the undesirable loose end which otherwise results from the cutting operation.

The operation of the tool will now be described in more detail with reference to Figures 13-16. The tool is preferably programmed to run through a series of steps during one complete cycle. During the first step of the cycle, anvils 84 are positioned in a "home" position, as shown in Figure 13. In this home position, anvils 84 are extended outward from housing 86 the maximum distance whereby surfaces 152 of guide blocks 88 contact surfaces 154 of arms 84. In this positions, anvils 80 are spaced at a maximum distance from one another. The tape is feed through the tool until leading end 142 of the tape rests approximately 1/16 inch above the anvils (see Figures 10-11).

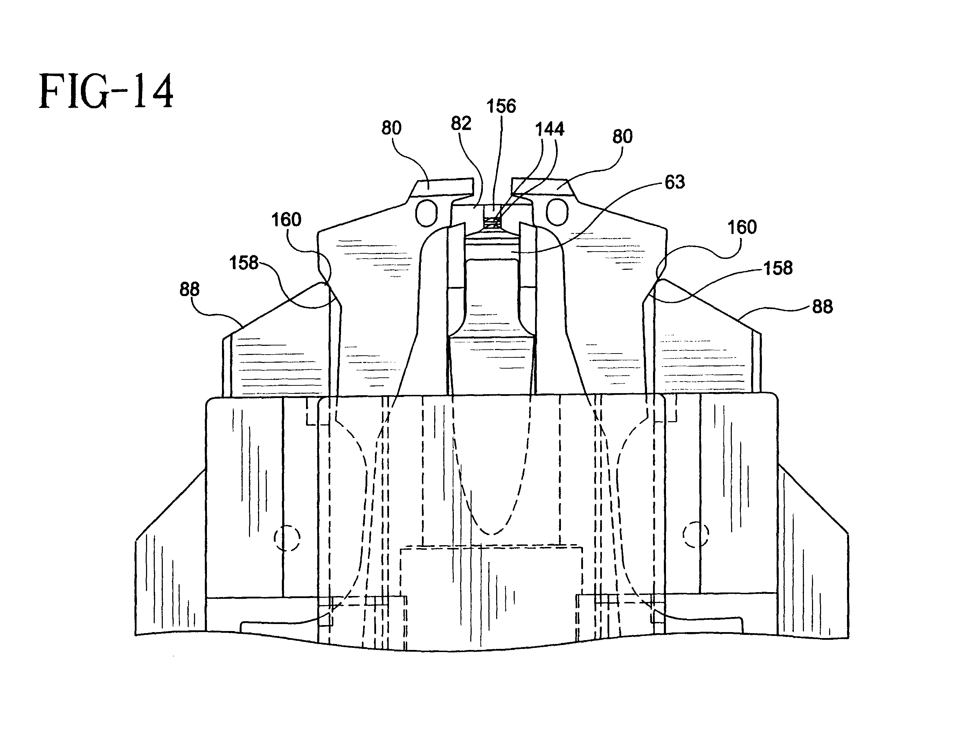

Thereafter, anvils 80 are withdrawn towards clamping block 82 to place the tool in the "guide" position, as shown in Figure 14. In this position, the jaw assembly has closed to encircle the bundle of articles. Once the anvils are in the guide position, tape is fed upward through tape track 63 around the interior of the jaw assembly until the tape extends between lower angled surfaces 136 of anvils 80 and surface 156 of clamping block 82 (see Figure 5a). Surface 156 includes teeth 144 which grip the tape when such tape is pressed thereagainst by anvils 80.

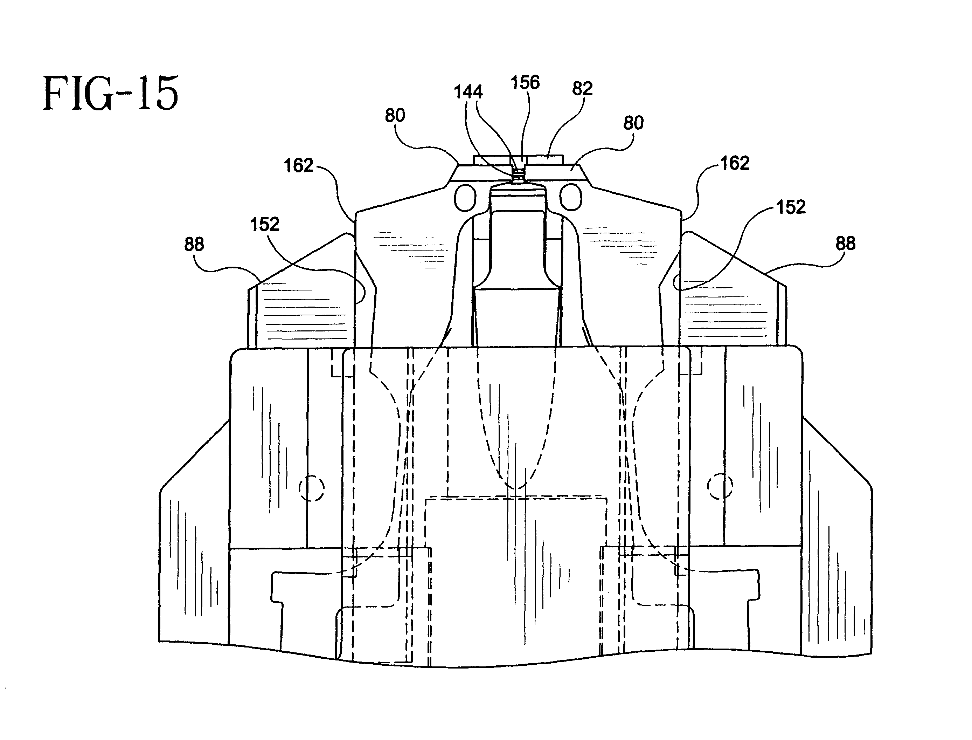

Thereafter, the anvils are further withdrawn to clamp tape 40 between lower surfaces 136 of anvils 80 and surface 156 of clamping block 82 and place the tool in the "clamp" position, as shown in Figure 15.

It can be seen in the guide position that surfaces 158 of arms 84 contact rounded comers 160 of guide blocks 88, thus urging anvils 80 toward one another. In the clamp position, surfaces 162 of arms 80 come into contact with surfaces 152 of guide blocks 88, thus urging anvils 80 even closer together.

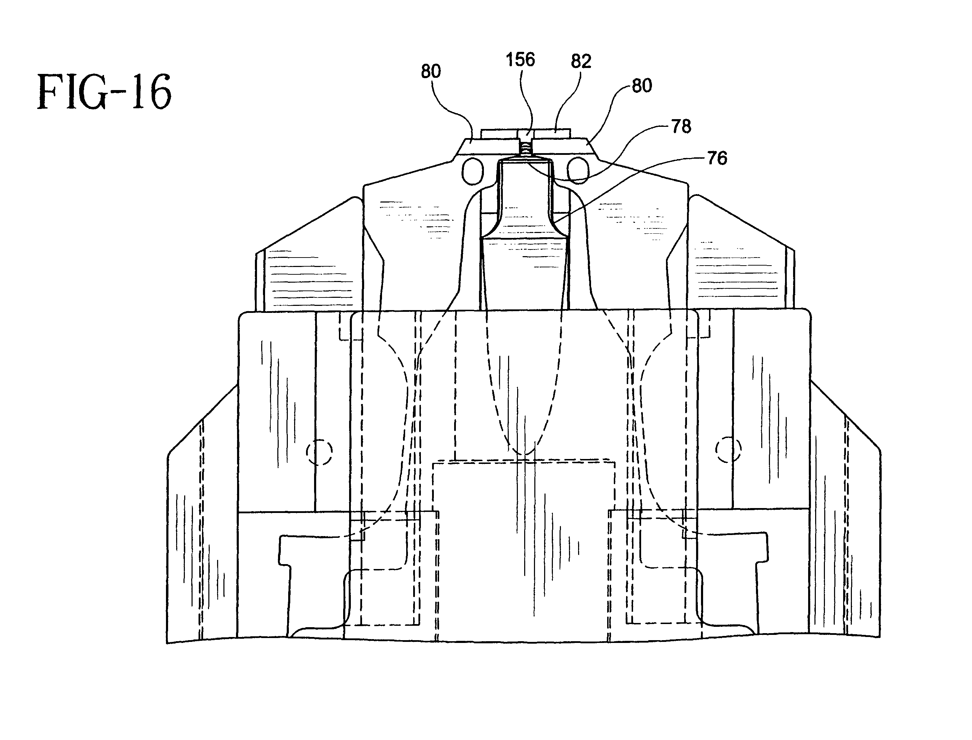

Once the tape has been clamped between lower angled faces 136 of anvils 80 and clamping block 82, the second motor 68 (which operate the drive mechanism assembly) is reversed to apply tension to the loop of tape surrounding a bundle of wires 140. Thereafter, the cooperating anvils and guide block are translated toward tip 78 of ultrasonic horn 76 to place the tool in the "weld" position, as shown in Figure 16. In this weld position, the anvils urge both layers of tape against welding tip 78 of ultrasonic horn 76 (see also Figure 10). The ultrasonic horn is then actuated for a period of time sufficient to weld the overlapped tape together. Because the anvils are angled approximately 12° (see Figure 5a) while the welding tip is flat, pressure is exerted on both sides of the tape. As a result, welding is effected at the locations indicated in Figure 12, with no welding occurring at the center of the tape. Inasmuch as the center of the tape does not melt during the welding process, tension can be maintained on the looped tape during the welding process.

After the primary weld is accomplished, the anvils are translated a short distance away from welding tip 78 to allow welding tip 78 to rotate about pin 128 to its second cutting/tack welding position. Specifically, the anvils translate away from welding tip 78 to allow welding tip 78 to displace downward approximately 2.54 mm (0.100 inches). Once the ultrasonic horn is in the cutting/tack welding position, anvils 80 and clamping block 82 are retracted to urge cutting edge 146 into contact with tape 40. The combination of pressure applied by cutting edge 146 and ultrasonic energy (which soften the tape) results in the tensioned loop being severed from the stock of tape. As the tensioned loop is severed from the stock of tape, ultrasonic horn 76 tack welds the distal end 148 to the underlying layer of tape thus eliminating any unsecured loose ends or protruding sharp edges. Following the cutting operation, the tool returns to the home position for the start of a second cycle.

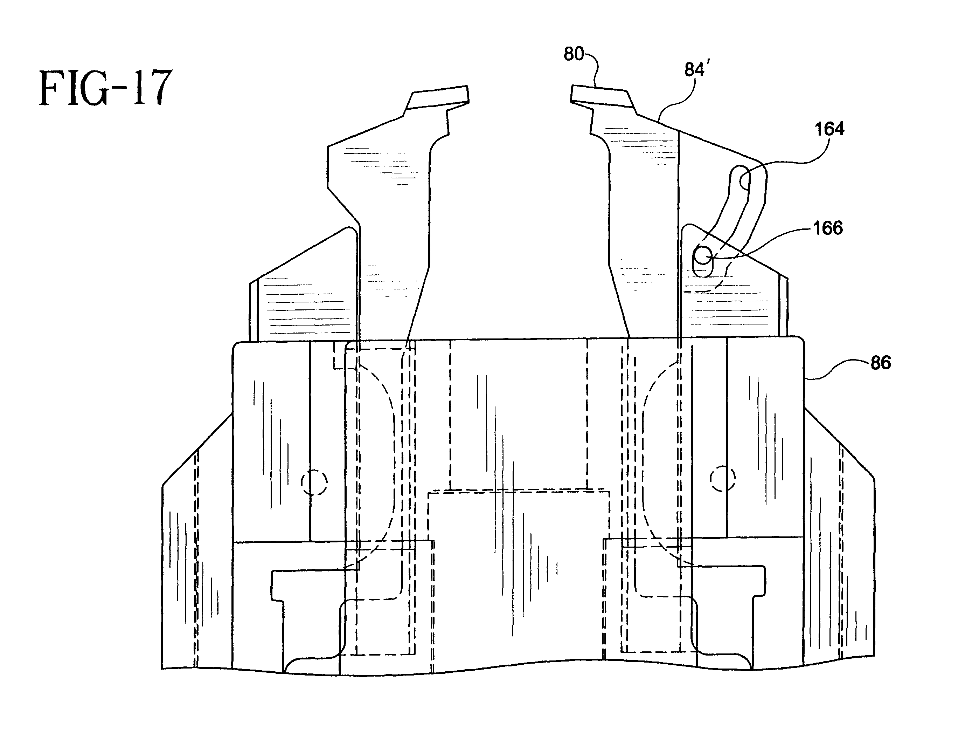

An alternative anvil arm 84' is shown in Figure 17. In this alternative embodiment, anvil arm 84' includes a guide slot 164 which cooperates with a guide pin 166, thus causing anvils 80 to move with respect to one another as anvils 80 are moved with respect to housing 86.

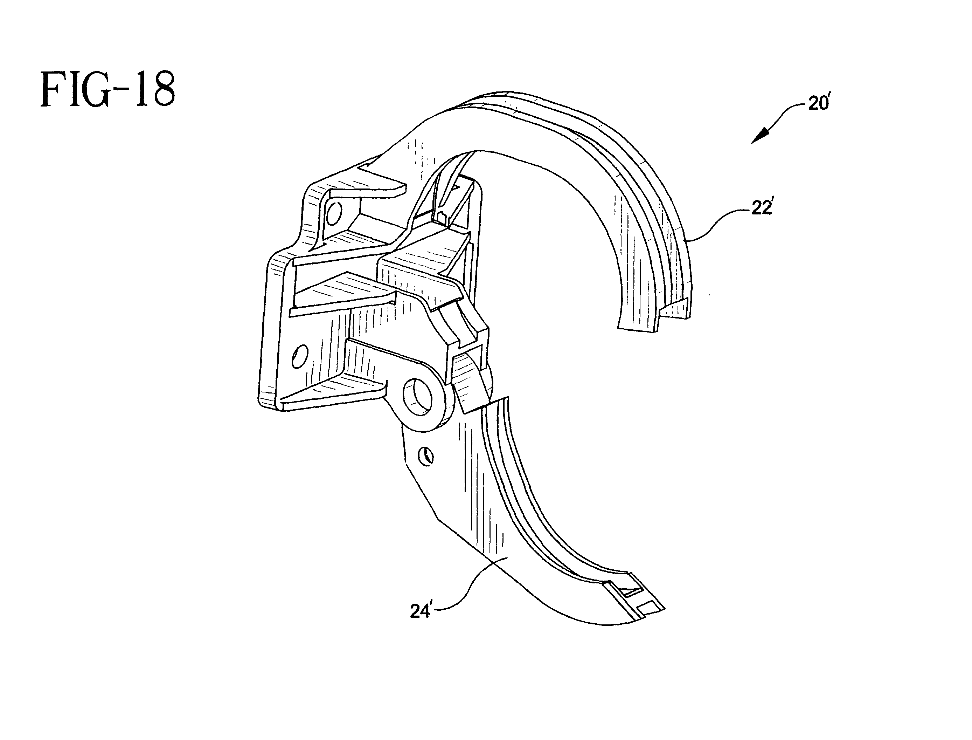

An alternative jaw assembly is shown in Figure 18. Particularly, alternative jaw assembly 20' includes an upper stationary jaw 22' configured to loop about a bundle of elongate articles. Jaw assembly 20' further includes a shorter lower moveable jaw 24'. The configuration of jaw assembly 20' may facilitate the bundling of elongate articles in certain applications.

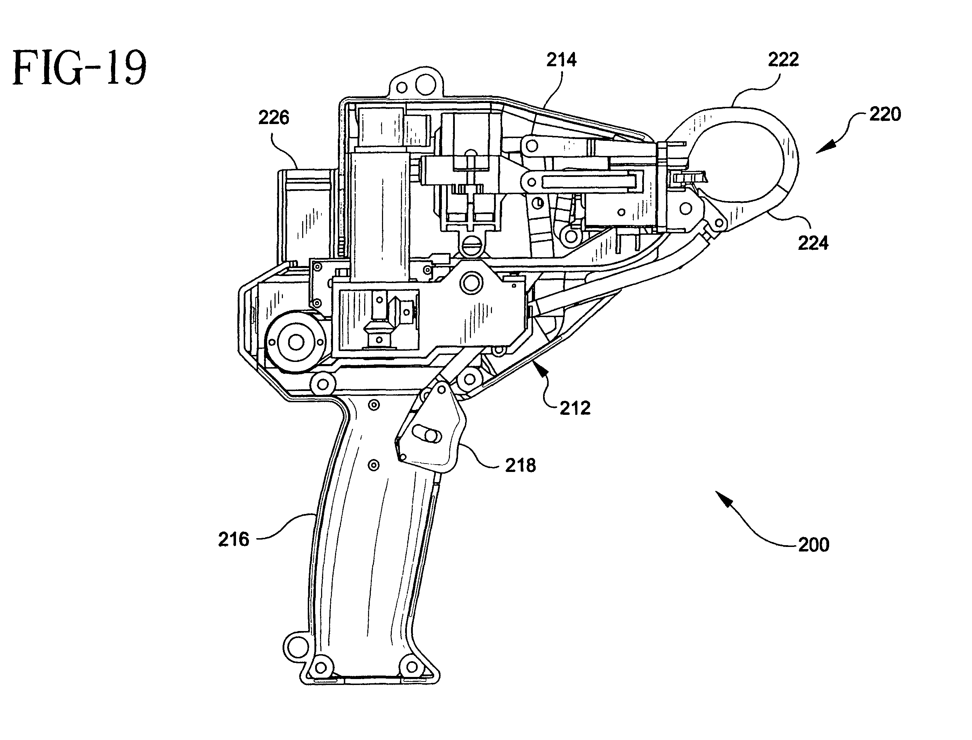

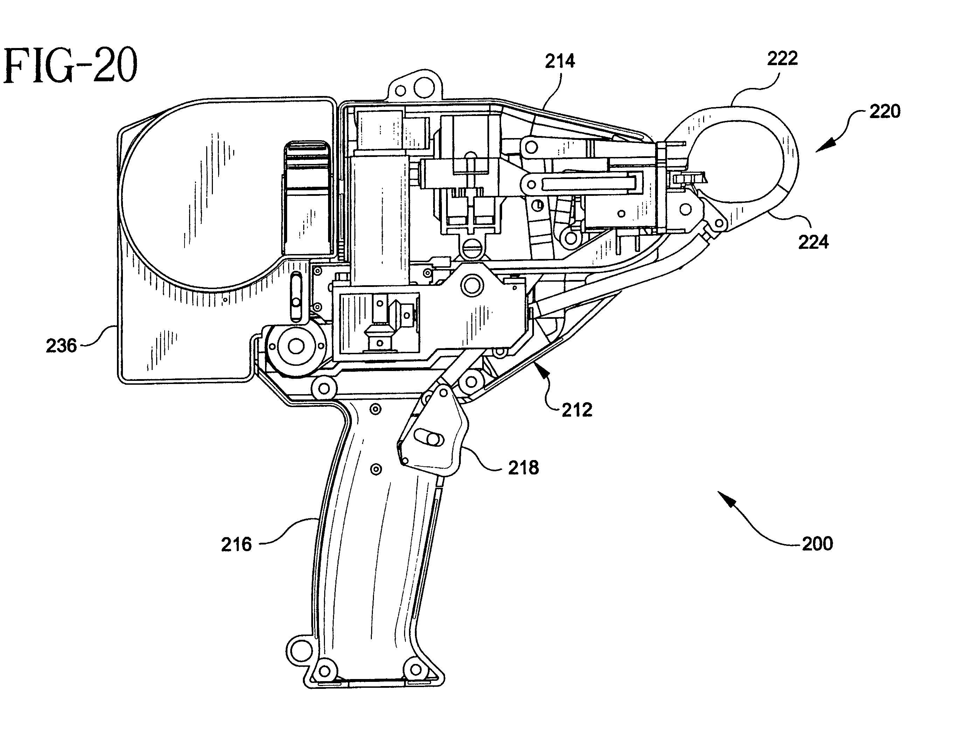

An alternative tool, i.e., tool 200, is shown in Figures 19-20. Except as discussed hereinabove, tool 200 is similar to tool 10 in design and operation. In this regard, tool 200 includes a generally pistol-shaped housing 212, the housing including a body 214 and a handle 216. A trigger 218, for operating the tool, is provided on handle 216. A jaw assembly 220 is provided on a forward end of tool 200. Jaw assembly 200 includes an upper stationary jaw 222 and a lower movable jaw 224. It will be noted that the positioning of the jaws has been reversed from the positioning of the jaws of tool 10 shown in Figs. 1-3. More particularly, the shorter jaw component (i.e., jaw 224 in tool 200) is utilized as the movable jaw component and is located to form the lower portion of the jaw assembly in tool 200 (similar to the design described with respect to Fig. 18). In this manner, elongate articles are more readily grasped in that the upper curved jaw may be placed thereabout without the need to excessively maneuver the tool.

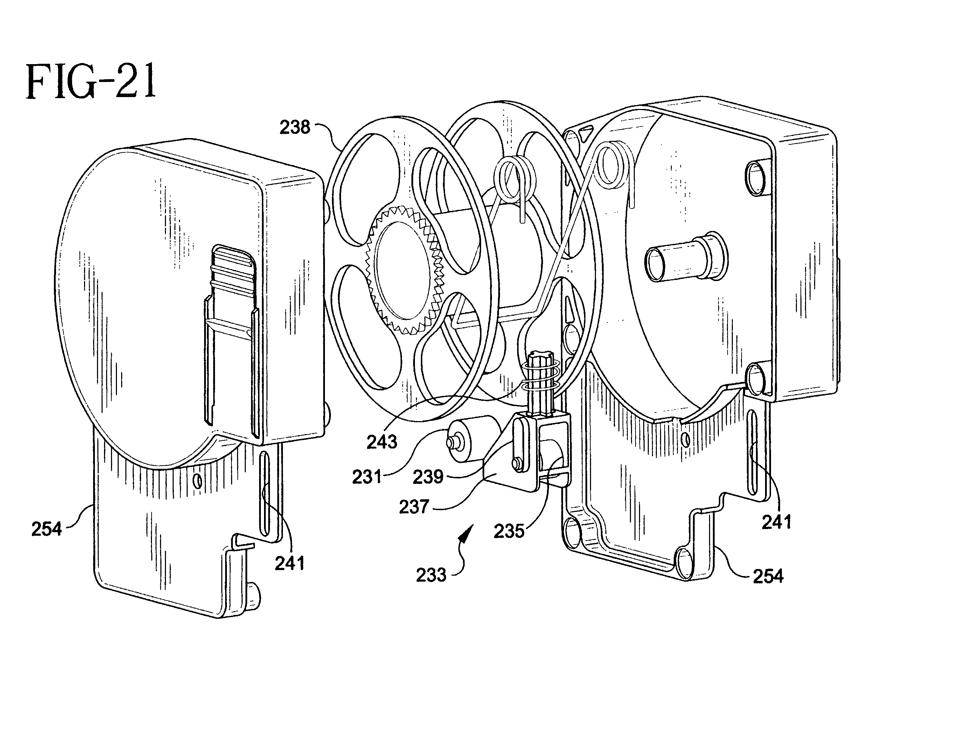

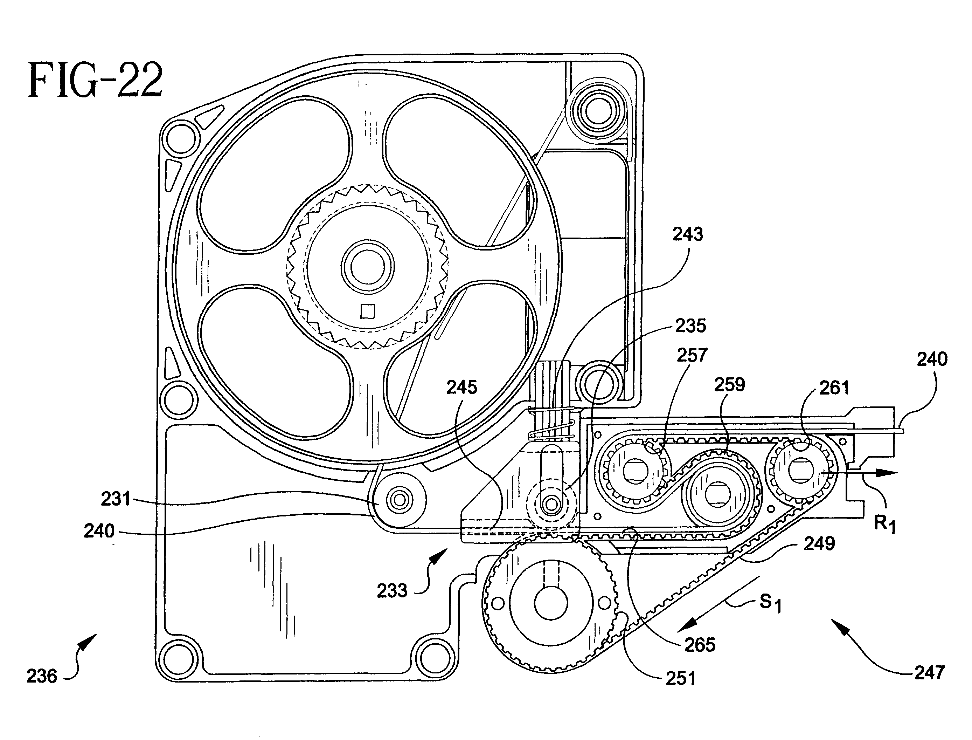

The rear portion of body 214 includes a cartridge mounting interface 226 configured to receive and cooperate with tape supplying cartridge 236. Except as discussed below, cartridge 236 is similar to cartridge 36. Referring now to Figures 21-22, it will be noted that pinch/guide wheel 46, wheel guide 48, spring assembly 50 and track 52 of cartridge 36 have now been replaced with a guide wheel 231 and a spring loaded tape guide assembly 233. Assembly 233 includes a pinch wheel 235 rotatably supported within wheel housing 237. Shoulder 239, which is stepped outward a distance from a sidewall of the wheel housing, is captured within elongated raceway 241 formed in cartridge housing 254 upon assembly of the cartridge. A spring 243 biases wheel housing 237 and pinch wheel 235 towards tape 240 when cartridge 236 is assembled and mounted on the tool (see Fig. 22). Finally, wheel housing 237 includes a guide channel 245 sized to facilitate passage of tape 240 therethrough. In this regard, channel 245 is formed with a height dimension sufficient to allow passage of the tape without buckling, but not so great as to allow out-of-plane buckling of the tape which can produce jamming of the tape as the tape is advanced through wheel housing 237.

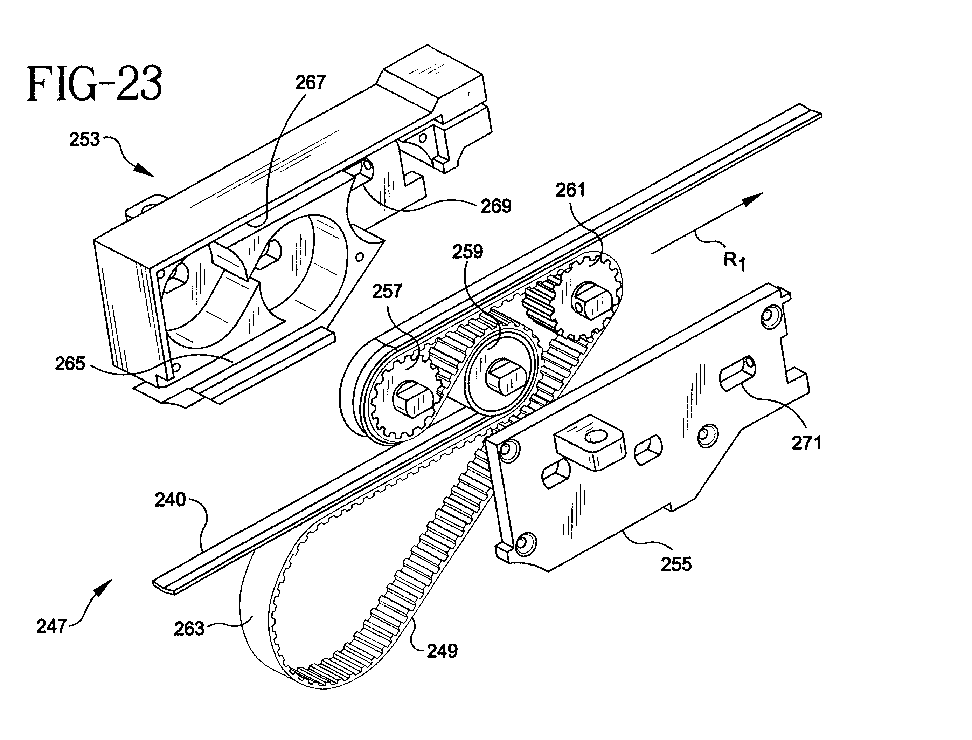

Unlike tool 10 which utilizes drive/guide wheel 28 and pinch/guide wheel 46 to advance and/or tension the weldable tape, tool 200 utilizes a belt drive mechanism 247 for advancement and tensioning of the tape (see Figures 22-23). Mechanism 247 includes drive belt 249, drive wheel 251, drive housing 253, cover 255, and wheels 257, 259 and 261. Drive wheel 251 is driven by one of the two motors incorporated into the tool. As shown, belt 249 is preferably a toothed belt having a substantially planar tape-contacting surface 263.

Tape 240 travels through guide channel 245, is pinched between pinch wheel 235 and belt 249 and thereafter is fed into a guide channel 265 formed in drive housing 253. Belt 249 defines one wall of guide channel 265. The tape is therefore captured between the belt and an inner wall surface of drive housing 253. It is to be noted that guide channel 265 prevents out-of-plane buckling of the tape as the tape is advanced. In one preferred embodiment, tape 240 has a thickness of 0.508 mm (0.020 inches) and a width of 4.57 mm (0.180 inches), while guide channel 265 has a height of 1.27 mm (0.050 inches)(as measured between the tape-contacting surface of belt 249 and the opposing wall of drive housing 253) and a width of 5.08 mm (0.2 inches).

Following advancement of tape 240 through channel 265, tape 240 is fed between wheel 259 and belt 249. Tape 240 is then carried around wheel 257 on surface 263 of belt 249 before being fed into a second guide channel 267. Again, belt 249 forms one wall of guide channel 267. Upon exiting guide channel 267, tape 240 is fed into a tape track (not shown) and advanced to the jaw assembly of the tool.

During feeding of the tape to the jaw assembly, belt 249 travels in the direction S₁ shown in Fig. 22. To tension the looped tape about the bundle of articles, the direction of rotation of drive wheel 251 is reversed which in turn reverses the direction of travel of belt 249. As will be recognized by those skilled in the art, belt 249 presses tape 240 against wheel 259 during the tensioning cycle. Because belt 249 contacts a significant length of tape as it travels around wheel 259 (i.e., greater than ½ the circumference of the wheel), the belt maintains a strong frictional grip on the tape and may thereby adequately tension the looped tape without any slippage thereof.

As shown, wheels 257 and 259 are rotatable within belt housing 253, but are not capable of any displacement with respect thereto. Wheel 261, however, is preferably spring loaded in a direction R₁ (i.e., the direction of tape travel) to maintain proper tension in the belt drive. In this regard, slot 269 in drive housing 253 and slot 271 in cover 255 are elongated to allow movement of wheel 261 in the direction of tape travel. Finally, when cover 255 is assembled to drive housing 253, guide channels 265, 267 are enclosed within drive housing 253.

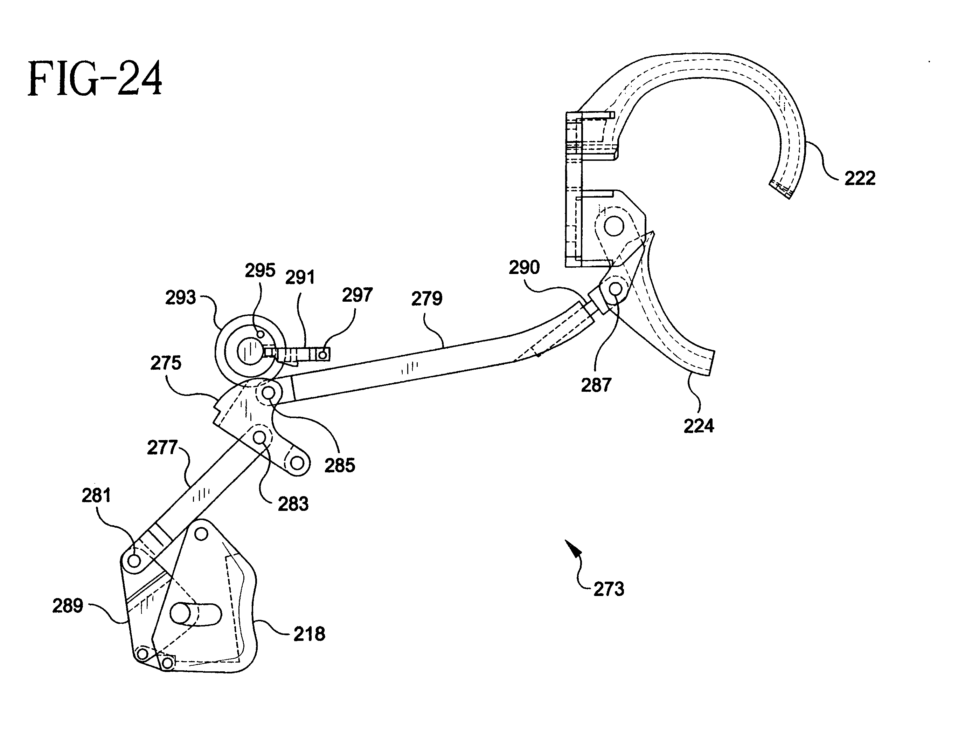

Referring now to Figs. 24-25, tool 200 also includes an improved jaw actuating assembly 273. Assembly 273 includes control linkage 275, control rod 277 and control rod 279. Control rod 277 has first and second ends 281, 283, respectively, while control rod 279 has first and second ends 285, 287, respectively. As shown, first end 281 of rod 277 is connected to trigger 218 via linkage 289, while second end 283 of rod 277 is pivotally connected to control linkage 275. First end 285 of rod 279 is also pivotally connected to control linkage 275, while second end 287 of rod 279 is pivotally connected to lower movable jaw 224. Second end 287 of rod 287 preferably includes an adjustable link 290 to facilitate assembly of rod 278 to moveable jaw 224.

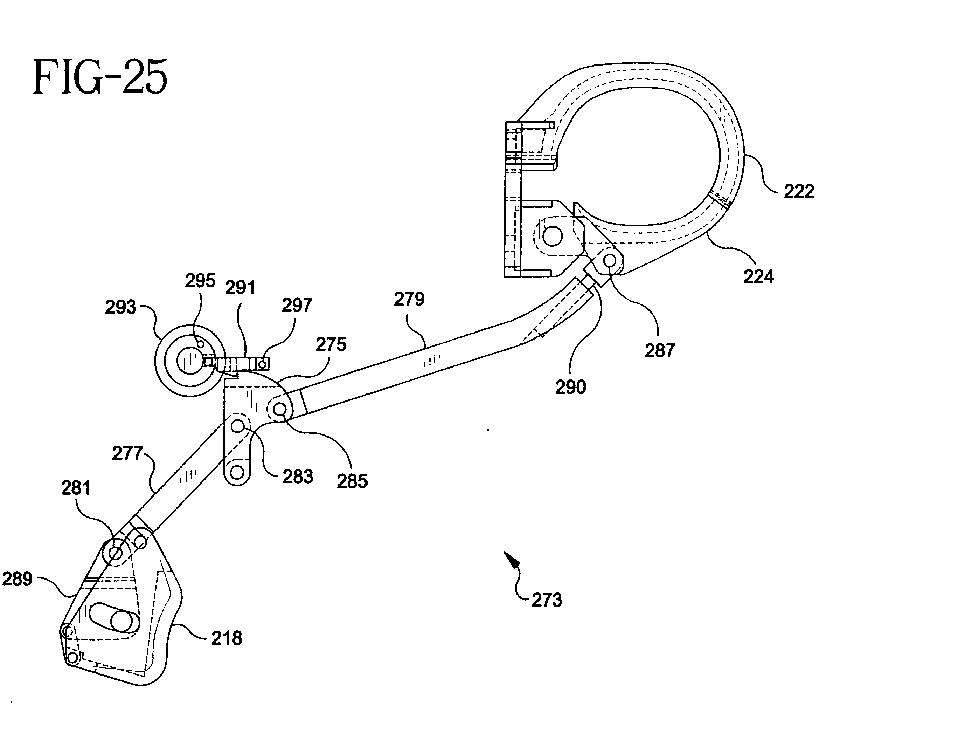

Control linkage 275 is moveably mounted with respect to the tool housing 212, and is movable between a first position (as shown in Figure 24) and a second position (as shown in Figure 25). Control linkage 275 is normally biased to the orientation shown in Figure 24. Referring to Figure 24, trigger 218 is shown in a standby position (i.e., non-actuated) and lower movable jaw 224 is shown in an open position in Figure 24. Upon actuation of trigger 218 (as shown in Figure 25), linkage 289 moves rod 277, causing control linkage 275 to pivot, which moves rod 279, and in turn moves lower jaw 224 to the closed position. Inasmuch as control linkage 275 is biased to the orientation shown in Figure 24, releasing of trigger 218 would normally result in the reopening of lower jaw 224.

To hold jaw 224 closed during the cycling of the tool (without the need to keep trigger 218 depressed), assembly 273 further includes a locking pawl 291 which engages control linkage 275 when linkage 275 is pivoted to the orientation shown in Figure 25. As a result, lower jaw 224 remains in its closed position even after trigger 218 is released. Assembly 273 also includes a release mechanism which includes a gear 293 and a release tab 295. Gear 293 is rotated counter-clockwise as the tool is cycled through the bundling operation. During this period, pawl 291 holds linkage 275 in the orientation of Figure 25 whereby jaw 224 is held closed. Gear 293 is synchronized with the tool so that upon completion of the bundling operation, release tab 295 contacts pawls 291, thereby pivoting pawl 291 clockwise about point 297. Upon pivoting of pawl 291, the biasing force applied to control linkage 275 causes linkage 275 to return to the orientation of Figure 24, whereby jaw 224 is moved to the open position to allow the previously bundled elongate articles to be removed from the jaws. The tool is then ready for its next bundling cycle.

Thus, upon placement of a plurality of elongate articles within jaw assembly 220, trigger 218 is actuated and then released. The actuation of trigger 218 moves lower jaw 224 to its closed position. Lower jaw 224 is held in its closed position by pawl 291 until the bundling operation has been completed (i.e., the tape has been looped about the articles, welded and severed from the supply roll), at which point release tab 295 pivots pawl 291 to allow lower jaw 224 to open whereby the bundled articles are removed. Jaw actuating assembly 273 therefore eliminates the need for the tool operator to keep the trigger depressed during the bundling operation.

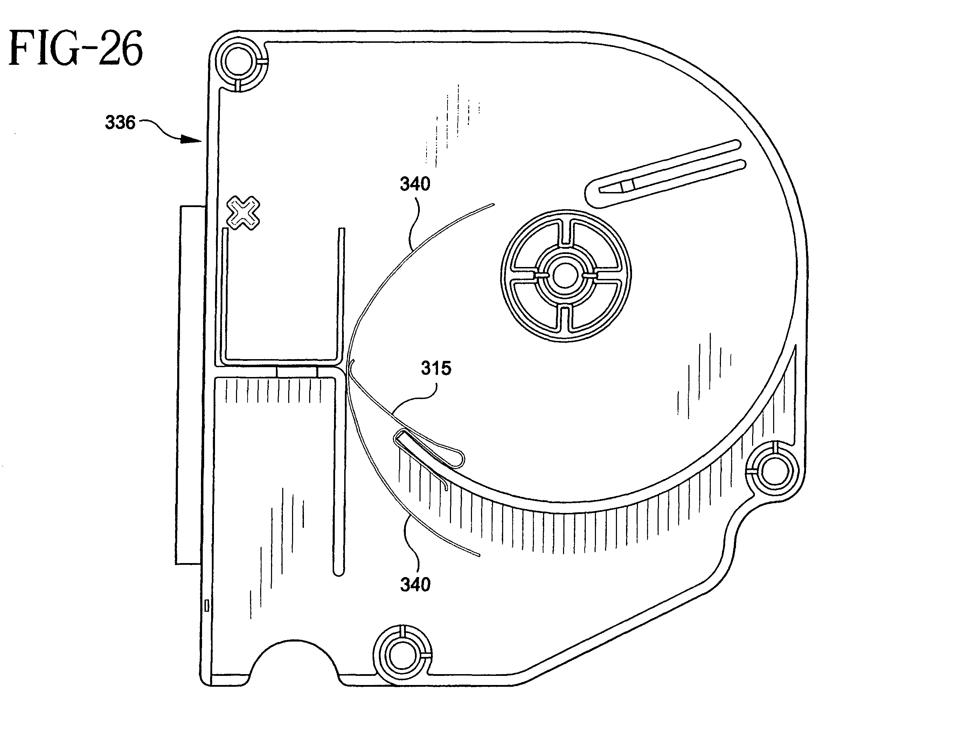

Cartridge 336 as shown in figure 26 includes a deflectable "trap door" 315. The cartridge is assembled so that a weldable tape 340 contained therein initially extends between trap door 315 and the adjacent wall of the cartridge. Once the entire length of tape contained within the cartridge is depleted, the resilient trap door blocks access to the spool by bearing directly against the wall of the cartridge, thereby preventing replacement tape from being loaded into the cartridge in an unauthorized manner. As each cartridge is designed for disposable one-time use, the trap door precludes the reloading of the cartridge for a second unauthorized use. The trap door feature provides quality assurance by preventing used cartridges (which may be damaged or warn) from again being used in connection with the tool, such use potentially resulting in improper dispensing of tape and/or damage to the tool.

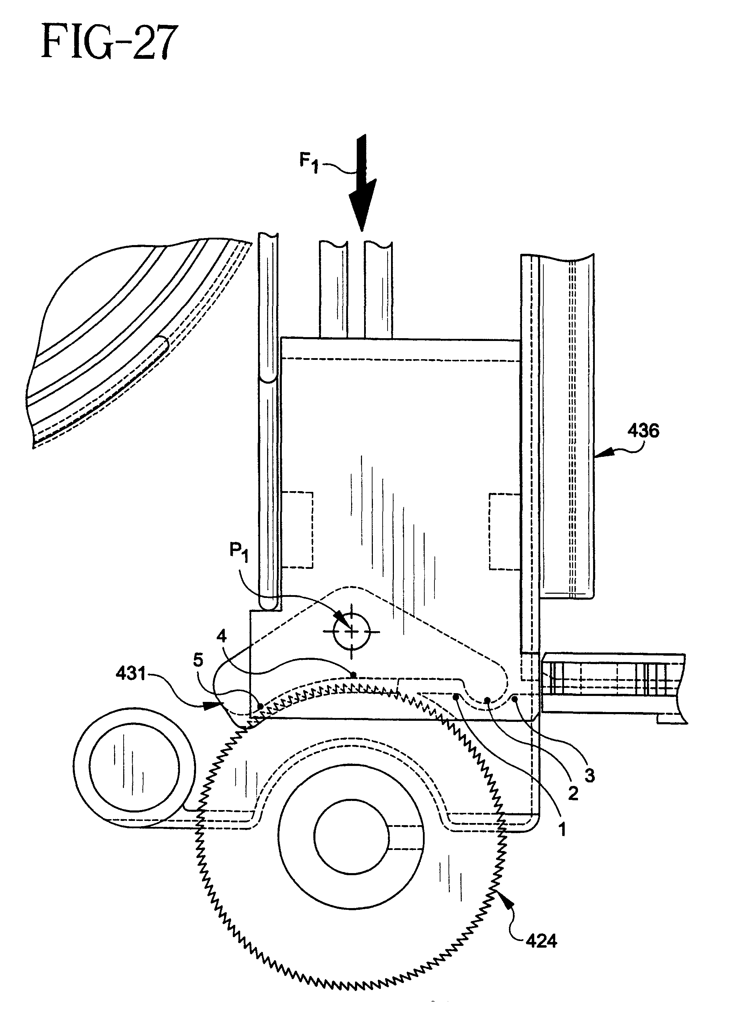

The tool as shown in figure 27 utilizes a cartridge 436. The weldable tape (not shown) is held in contact with drive wheel 424 by a spring-loaded arch shaped pad 431. The spring-loaded arch shaped pad forces the tape to follow the circumference of the drive wheel 424 from point (4) for some arc length to point (5) rather than just tangential. As a result, the tape is in contact with approximately ten teeth on the drive wheel as it passes between the drive wheel and the spring-loaded arch shaped pad. The normal force on the tape and drive wheel from the pad between points (4) and (5) has two components. The first component is from a spring force F₁ and is constant. The second component is a variable force generated by the tension in the tape. During the tensioning portion of the cycle, drive wheel 424 rotates counterclockwise (as viewed in Figure 27) and the tape follows an offset path defined by points (3), (2), and (1) respectively. Points (1) and (3) are fixed relative to point (2). As all the slack is removed from the tape and it tightens around the bundle, the tape attempts to straighten its path between points (3) and (1). This straightening action imparts a reaction force at point (2) on the arch shaped pad causing its rotation about point P₁ and subsequent increase in normal force between points (4) and (5). The magnitude of additional normal force is directly proportional to the tension in the tape.

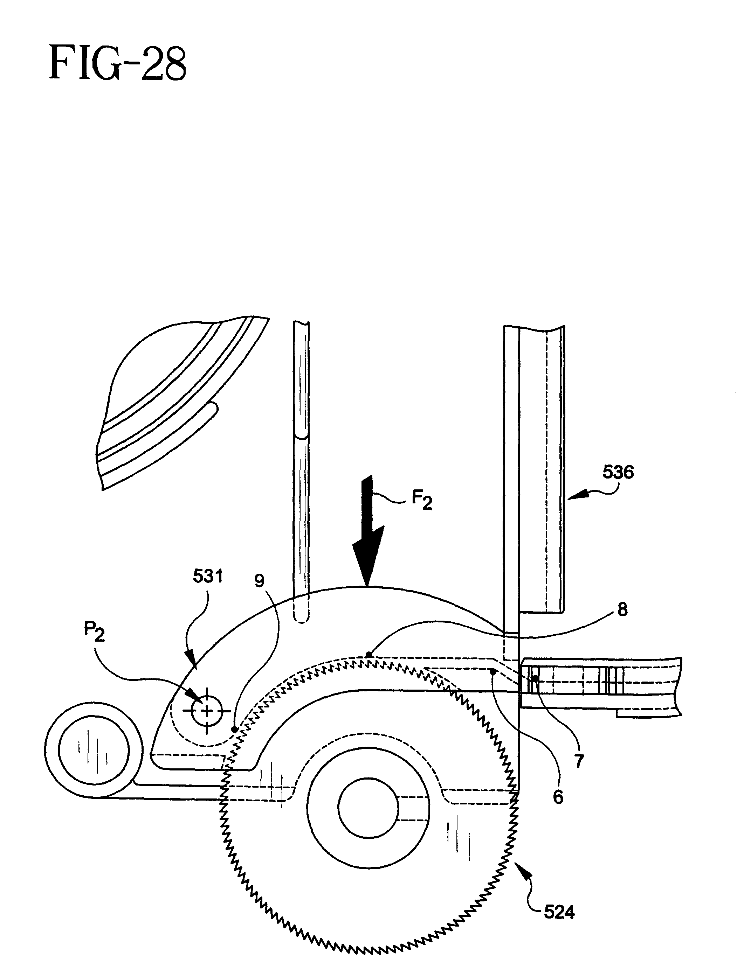

The tool as shown in figure 28 utilizes a cartridge 536. A pivotally mounted arch shaped pad 531 forces the strap into contact with the teeth of the drive wheel from point (8) for some arch length to point (9). In this regard, pad 531 is pivotable about point P₂. A normal force F₂ is effected by a spring in this zone. A large diameter drive wheel 524 is used which yields a longer arc length of contact between strap and drive wheel and results in approximately twenty teeth driving the strap. The automatic tensioning feature is actuated similarly by tension in the tape, as it follows the offset path defined by points (7) and (8). The tape will tend to straighten as the tension increases which imparts a reaction force on the back-up pad at point (6). Likewise, the magnitude of additional normal force is directly proportional to the tape tension.

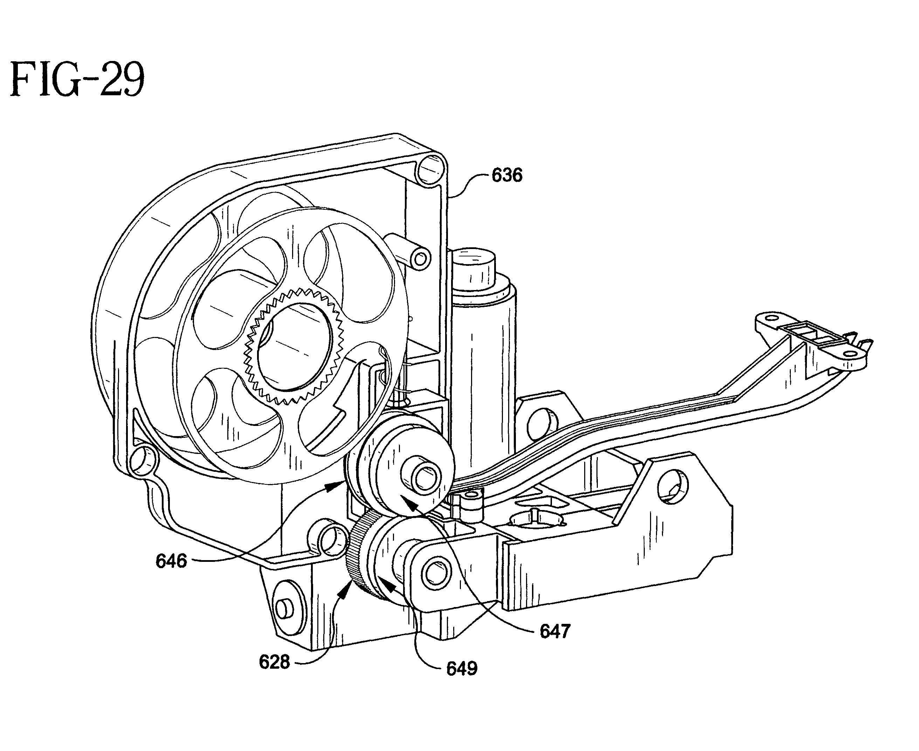

The tool as shown in figure 29 utilizes a cartridge 636. The cartridge includes a spring loaded idler wheel 646 which cooperates with drive wheel 628 to advance the tape. Idler wheel 646 includes gear 647 which engages gear 649, gear 649 being driven in unison with drive wheel 628. As a result, idler wheel 646 becomes an active part of the tape drive system. Additional grip on tape is accomplished because both surfaces of the tape are in contact with positively driven wheels.

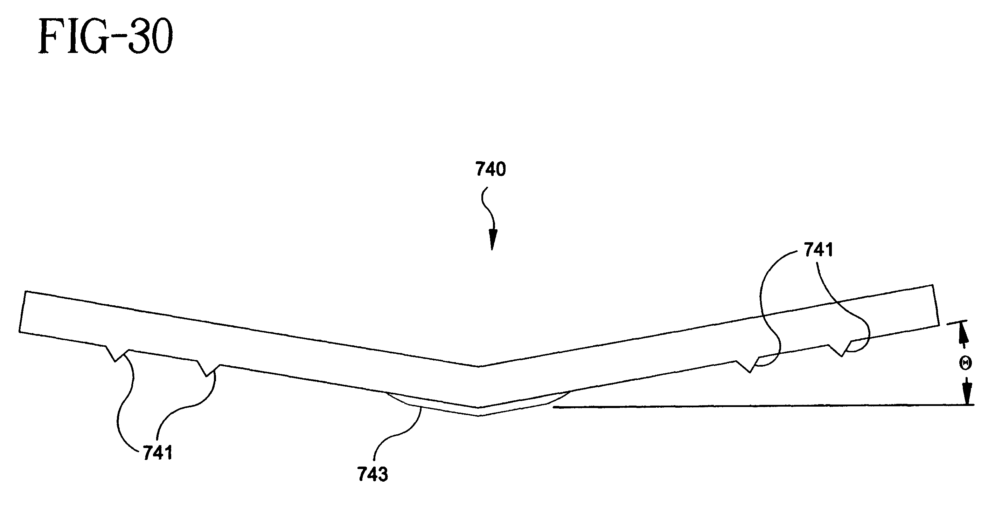

The tool of the present invention utilizes a V-shaped weldable tape. As shown in Figure 30, tape 740 has a V-shaped cross-section wherein θ is from about 5° to 20°, and preferably about 10°. Tape 740 preferably includes a pair of ultrasonic directors 741 located on each side of the tape. The directors decrease the time necessary to effect welding, while the positioning of the directors facilitate the location of the welds (see Fig. 12). It will be appreciated that the V-shaped cross-section facilitates guiding of the tape about the jaws of the tool inasmuch as it causes self-centering of the overlapped tape once such tape has been looped about the elongate article to be bundled. The V-shaped cross-section also increases the resistance of the tape to buckling as the tape is advanced through the tool. In addition, tape 740 may include an elastomeric material 743 on its article-contacting side which increases resistance to lateral sliding of the welded loop of the tape along the bundle of articles. The directors 741 may also provide additional resistance to lateral sliding in that they also contact and thereby grip the elongate articles in the bundle.

## Claims

1. An ultrasonic tieing tool (200) for applying a weldable tape about a bundle of elongate articles, comprising:
a tool housing (212) including a body (214) and a handle (216);
a jaw assembly (220) cooperating with said body (214) and configured to grasp said elongate articles whereby said tape may be looped about said articles;
an ultrasonic horn supported within said body (214) and including a welding tip located proximate said jaw assembly (220);
at least one anvil (80) located to cooperate with said welding tip and adapted for manipulating a portion of said weldable tape bearing thereagainst; and
a belt drive mechanism (247) for advancing said tape to said jaw assembly (220) and for tensioning said tape (240) following looping of said tape (240) about said articles, said mechanism (247) including a drive belt (249) and a drive housing (253) surrounding at least a portion of said belt (249), said tape contacting a first side of said belt (249) along a predetermined tape-contacting segment thereof, **characterized in that** said drive housing (253) constrains the second side of said belt (249) along said tape-contacting segment, and wherein said first side of said belt (249) and said housing (253) define a guide channel (265) for passage of said tape therethrough, and wherein said guide channel (265) is dimensioned to resist out-of-plane buckling of said tape (240) as said tape (240) is advanced therethrough.

2. The tool in accordance with claim 1, wherein said mechanism includes a drive wheel (251) for turning said belt (249); and
further comprising a spring loaded tape guide assembly (233) located to cooperate with said drive wheel (251) to facilitate advancement of said tape into said guide channel (265) of said drive housing (253).

3. The tool in accordance with claim 2, wherein said guide assembly (233) includes a wheel housing (237) and a pinch wheel (235) rotatably supported within said wheel housing (237), and wherein said wheel housing (237) is biased towards said drive wheel (251) so that said pinch wheel (235) presses said tape against said drive belt (249).

4. The tool in accordance with Claim 3, wherein said wheel housing (237) includes a guide channel (245) extending toward said pinch wheel (235) to guide said tape between said pinch wheel (235) and said belt (249) and into said guide channel (265) of said drive housing (253).

5. The tool in accordance with Claim 4, further comprising a guide wheel (231) located to orient said tape for advancement of said tape into said guide channel (245) of said wheel housing (237).

6. The tool in accordance with Claim 1, wherein said mechanism further includes a spring-loaded wheel (261) for tensioning said belt and at least one tape gripping wheel (259) for pressing of said tape thereagainst by said belt (249).

7. The tool in accordance with Claim 1, wherein said mechanism (247) includes another guide channel (267) parallel to and laterally spaced from said at least one guide channel (265).

8. The tool in accordance with Claim 7, wherein said guide channels (265,267) define tape transfer spans which are oriented in a substantially horizontal orientation when said tool is oriented in a substantially upright orientation.

9. The tool in accordance with Claim 1, wherein said jaw assembly (20) includes at least one moveable jaw (24); and
further comprising a trigger (18) operatively connected to said movable jaw (24), said trigger (18) being mounted on said handle (10) and moveable between a standby position and an actuated position.

10. The tool in accordance with Claim 9, further comprising a control linkage (275) movably mounted with respect to said tool housing (12) and movable between a first position and a second position; and
further comprising first (277) and second (279) control rods having first (281,285) and second (283,287) ends respectively, said first rod (277) extending between said trigger (18) and said linkage (275) whereby movement of said trigger (18) from said standby position to said actuated position causes said first rod (277) to pivot said linkage (275) from said first position to said second position, said second rod (279) extending between said linkage (275) and said movable jaw (24). whereby pivoting of said linkage (275) from said first position to said second position causes said second rod (279) to move said movable jaw (24) from an open position to a closed position, and wherein said linkage (275) is biased to said first position; and
further comprising a locking mechanism (291) for holding said linkage (275) in said second position following actuation of said trigger (18); and
further comprising a release mechanism for releasing said locking mechanism (291) following welding of said tape about said articles whereby said linkage (275) pivots to said first position causing said second rod (279) to move said movable jaw (24) to said open position.

11. The tool in accordance with Claim 1, wherein said welding tip (78) is displaceable between a first location wherein said welding tip (78) is positioned to weld said tape thus securing said tape about said elongate articles and a second location wherein said welding tip (78) is displaced a distance from said first location and positioned to effect cutting of said tape and tack welding of the resultant cut end to the underlying tape of said loop.

12. The tool in accordance with Claim 11, wherein said ultrasonic horn (76) is rotatably mounted to said housing (12) whereby said weldingtip (78) is rotatable between said first and second locations.

13. The tool in accordance with Claim 12, wherein said ultrasonic horn (76) is rotatable about a point vertically displaced from an axis extending through said welding tip (78) whereby rotation of said welding tip (78) about said point produces substantially vertical movement with respect to said anvil (80).

14. The tool in accordance with Claim 1, further comprising a power supply and a control mechanism for powering and operating said tool.

## Patentansprüche

1. Ein Ultraschallbindewerkzeug (200) zum Legen eines schweißbaren Bandes um ein Bündel aus langen Gegenständen mit
einem Werkzeuggehäuse (212) mit einem Hauptteil (214) und einem Handgriff (216),
einer mit dem Hauptteil (214) zusammenarbeitenden Backenanordnung (220) mit einer Ausgestaltung zum Greifen der langen Gegenstände, wodurch das Band um diese geschlungen werden kann,
einem im Hauptteil (214) abgestützten Ultraschallhorn mit einer in der Nähe der Backenanordnung (220) befindlichen Schweißspitze,
mindestens einem zum Zusammenarbeiten mit der Schweißspitze angeordneten Amboß (80), der zum Handhaben eines Abschnittes des an ihm anliegenden schweißbaren Bandes geeignet ist, und
einem Riemenantriebsmechanismus (247) zum Vorschieben des Bandes zu der Backenanordnung (220) und zum Spannen des Bandes (240) im Anschluß an das Legen des Bandes (240) um die Gegenstände, wobei dieser Mechanismus (247) einen Antriebsriemen (249) und ein mindestens einen Abschnitt des Riemens (249) umschließendes Antriebsgehäuse (253) aufweist, wobei das Band mindestens eine erste Seite des Riemens (249) entlang eines vorgegebenen, das Band berührenden Abschnittes berührt,
**dadurch gekennzeichnet, daß** das Antriebsgehäuse (253) die zweite Seite des Riemens (249) entlang des das Band berührenden Abschnitts eingrenzt , und wobei die erste Seite des Riemens (249) und das Gehäuse (253) einen Führungskanal (265) für den Durchgang des Bandes durch diesen ausbilden und der Führungskanal (265) so bemessen ist, daß er einem Ausbeulen des Bandes (240) aus dessen Ebene beim Vorbewegen durch ihn
entgegenwirkt.

2. Das Werkzeug nach Anspruch 1, wobei der Mechanismus ein Antriebsrad (251) zum Bewegen des Bandes (249) enthält und
weiter eine zum Zusammenarbeiten mit dem Antriebsrad (251) angeordnete federbelastete Bandführungsanordnung (233) zum Erleichtern des Vorbewegen des Bandes in den Führungskanal (265) des Antriebsgehäuses (253) aufweist.

3. Das Werkzeug nach Anspruch 2, wobei die Führungsanordnung (233) ein Walzengehäuse (237) und eine in diesem drehbar abgestützte Klemmwalze (235) aufweist und das Walzengehäuse (237) in Richtung auf die Antriebsscheibe (251) vorgespannt ist, so daß die Klemmwalze (235) das Band gegen den Antriebsriemen (249) drückt.

4. Das Werkzeug nach Anspruch 3, wobei das Walzengehäuse (237) einen zum Führen des Bandes zwischen der Klemmwalze (235) und dem Riemen (244) und in den Führungskanal (265) des Antriebsgehäuses (253) in Richtung auf die Klemmwalze (235) verlaufenden Führungskanal (245) aufweist.

5. Das Werkzeug nach Anspruch 4, weiter mit einer Führungswalze (231) angeordnet zum Ausrichten des Bandes zu dessen Vorbewegen in den Führungskanal (245) des Walzengehäuses (237).

6. Das Werkzeug nach Anspruch 1, wobei der Mechanismus weiter eine federbelastete Walze (261) zum Spannen des Riemens und mindestens eine das Band erfassende Walze (254) zum Pressen des Bandes gegen diese durch den Riemen (249) aufweist.

7. Das Werkzeug nach Anspruch 1, wobei der Mechanismus (247) einen weiteren, parallel zu und seitlich in einem Abstand von mindestens einem Führungskanal (265) angeordneten weiteren Führungskanal (267) aufweist.

8. Das Werkzeug nach Anspruch 7, wobei die Führungskanäle (265, 267) Bandfortleitungsfelder ausbilden, die bei Ausrichtung des Werkzeugs in einer im wesentlichen aufrechten Ausrichtung in einer im wesentlichen horizontalen Ausrichtung ausgerichtet sind.

9. Das Werkzeug nach Anspruch 1, wobei die Backenanordnung (20) mindestens eine bewegliche Backe (24) und
weiter einen betriebsmäßig mit der beweglichen Backe (24) verbundenen Auslöser (18) aufweist und dieser auf dem Handgriff (10) und verschiebbar zwischen einer Bereitschafts- und einer Betriebsstellung befestigt ist.

10. Das Werkzeug nach Anspruch 9, weiter mit einem gegenüber dem Werkzeuggehäuse (12) beweglich befestigten und zwischen einer ersten und einer zweiten Stellung verschiebbaren Steuergestänge (275) und
weiter mit einer ersten und einer zweiten Steuerstange (277, 279) mit ersten bzw. zweiten Enden (281, 285; 283, 287), wobei die erste Stange (277) zwischen dem Auslöser (18) und dem Gestänge (275) verläuft, wodurch die Bewegung des Auslösers (18) aus der Bereitschafts- in die Betriebsstellung bewirkt, daß die erste Stange (277) das Gestänge (275) aus der ersten in die zweite Stellung schwenkt, die zweite Stange (279) zwischen dem Gestänge (275) und der verschiebbaren Backe (24) verläuft, wodurch ein Schwenken des Gestänges (275) aus der ersten in die zweite Stellung bewirkt, daß die zweite Stange (279) die bewegliche Backe (24) aus einer Offen- in eine Schließstellung verschiebt, und wobei das Gestänge (275) in die erste Stellung vorgespannt ist, und
weiter mit einem Riegelmechanismus (291) zum Halten des Gestänges (275) in der zweiten Stellung im Anschluß an ein Betätigen des Auslösers (18), und
weiter mit einem Auslösemechanismus zum Auslösen des Riegelmechanismus (291) im Anschluß an das Schweißen des Bandes an die Gegenstände, wodurch das Gestänge (278) in die erste Stellung schwenkt und bewirkt, daß die zweite Stange (279) die bewegliche Backe (24) in die Offenstellung verschiebt.

11. Das Werkzeug nach Anspruch 1, wobei die Schweißspitze (78) zwischen einer ersten Stellung, in der sie zum Anschweißen des Bandes und damit Sichern des Bandes um die langen Gegenstände positioniert ist, und einer zweiten Stellung verschiebbar ist, in der sie in einem Abstand von der ersten Stellung liegt und zum Bewirken eines Schneidens des Bandes und eines Heftschweißens des sich ergebenden abgeschnittenen Endes an das darunterliegende Band der Schleife positioniert ist.

12. Das Werkzeug nach Anspruch 11, wobei das Ultraschallhorn (76) am Gehäuse drehbar befestigt ist, wodurch die Schweißspitze (78) zwischen der ersten und der zweiten Stellung drehbar ist.

13. Das Werkzeug nach Anspruch 12, wobei das Ultraschallhorn (76) um einen gegenüber einer durch die Schweißspitze (78) verlaufenden Achse vertikal versetzten Punkt drehbar ist, wodurch die Drehung der Spitze (78) um den Punkt eine im wesentlichen vertikale Verschiebung gegenüber dem Amboß (80) bewirkt.

14. Das Werkzeug nach Anspruch 1, weiter mit einer Energieversorgung und einem Steuermechanismus zum Betreiben und Betätigen des Werkzeugs.

## Revendications

1. Outil de liaison par ultrasons (200) destiné à appliquer un ruban pouvant être soudé autour d'un groupe d'articles allongés, comprenant :
un boîtier d'outil (212) comprenant un corps (214) et une poignée (216) ;
un ensemble formant mâchoire (220) coopérant avec ledit corps (214) et configuré de manière à saisir lesdits articles allongés de telle sorte que ledit ruban puisse former une boucle autour desdits articles ;
une corne à ultrasons supportée à l'intérieur dudit corps (214) et comprenant une pointe de soudage située à proximité dudit ensemble formant mâchoire (220) ;
au moins une enclume (80) située de manière à coopérer avec ladite pointe de soudage et apte à manipuler une partie dudit ruban pouvant être soudé faisant appui contre celle-ci ; et
un mécanisme d'entraînement de courroie (247) destiné à faire avancer ledit ruban vers ledit ensemble formant mâchoire (220) et à tendre ledit ruban (240) après la formation en boucle dudit ruban (240) autour desdits articles, ledit mécanisme (247) comprenant une courroie d'entraînement (249) et un boîtier d'entraînement (253) entourant au moins une partie de ladite courroie (249), ledit ruban venant en contact avec un premier côté de ladite courroie (249) le long d'un segment prédéterminé en contact avec le ruban de celui-ci, **caractérisé en ce que** ledit boîtier d'entraînement (253) contraint le deuxième côté de ladite courroie (249) le long dudit segment en contact avec le ruban, et dans lequel ledit premier côté de ladite courroie (249) et ledit boîtier (253) définissent un canal de guidage (265) destiné au passage dudit ruban à travers celui-ci, et dans lequel ledit canal de guidage (265) est dimensionné de manière à résister à une déformation hors plan dudit ruban (240) lorsque ledit ruban (240) a avancé à travers celui-ci.

2. Outil selon la revendication 1, dans lequel ledit mécanisme comprend une roue d'entraînement (251) destinée à faire tourner ladite courroie (249) ; et
il comprend, en outre, un ensemble de guidage de ruban (233) taré par ressort situé de manière à coopérer avec ladite roue d'entraînement (251) afin de faciliter l'avancement dudit ruban dans ledit canal de guidage (265) dudit logement d'entraînement (253).

3. Outil selon la revendication 2, dans lequel ledit ensemble de guidage (233) comprend un logement de roue (237) et une roue pinceur (235) supportée à rotation à l'intérieur dudit logement de roue (237), et dans lequel ledit logement de roue (237) est sollicité en direction de ladite roue d'entraînement (251) de telle sorte que ladite roue pinceur (235) comprime ledit ruban contre ladite courroie d'entraînement (249).

4. Outil selon la revendication 3, dans lequel ledit logement de roue (237) comprend un canal de guidage (245) qui s'étend en direction de ladite roue pinceur (235) afin de guider ledit ruban entre ladite roue pinceur (235) et ladite courroie (249) et dans ledit canal de guidage (245) dudit logement d'entraînement (253).

5. Outil selon la revendication 4, comprenant, en outre, une roue de guidage (231) située de manière à orienter ledit ruban en vue d'un avancement dudit ruban dans ledit canal de guidage (245) dudit logement de roue (237).

6. Outil selon la revendication 1, dans lequel ledit mécanisme comprend, en outre, une roue (261) tarée par ressort destinée à tendre ladite courroie, et au moins un ruban saisissant la roue (259) en vue de comprimer ledit ruban contre celle-ci par l'intermédiaire de ladite courroie (249).

7. Outil selon la revendication 1, dans lequel ledit mécanisme (247) comprend un autre canal de guidage (267) parallèle au moins audit canal de guidage (245) et espacé latéralement au moins de celui-ci.

8. Outil selon la revendication 7, dans lequel lesdits canaux de guidage (265, 267) définissent des secteurs de transfert de ruban qui sont orientés dans une direction sensiblement horizontale lorsque ledit outil est orienté dans une direction sensiblement verticale.

9. Outil selon la revendication 1, dans lequel ledit ensemble formant mâchoire (20) comprend au moins une mâchoire (24) déplaçable ; et
il comprend, en outre, un déclencheur (18) relié en fonctionnement à ladite mâchoire (24) déplaçable, ledit déclencheur (18) étant monté sur ladite poignée (10) et déplaçable entre une position d'attente et une position d'actionnement.

10. Outil selon la revendication 9, comprenant, en outre, une liaison de réglage (275) montée de manière déplaçable par rapport audit logement d'outil (12), et déplaçable entre une première position et une deuxième position ; et
comprenant, en outre, des premier (277) et deuxième (279) barreaux de réglage présentant des premières (281, 285) et deuxièmes (283, 287) extrémités, respectivement, ledit premier barreau (277) s'étendant entre ledit déclencheur (18) et ladite liaison (275),
de telle sorte que le mouvement dudit déclencheur (18) de ladite position d'attente à ladite position d'actionnement amène ledit premier barreau (277) à faire pivoter ladite liaison (275) de ladite première position à ladite deuxième position, ledit deuxième barreau (279) s'étendant entre ladite liaison (275) et ladite mâchoire (24) déplaçable,
de telle sorte que le pivotement de ladite liaison (275) de ladite première position à ladite deuxième position amène ledit deuxième barreau (279) à déplacer ladite mâchoire (24) déplaçable d'une position d'ouverture à une position de fermeture, et dans lequel ladite liaison (275) est sollicitée vers ladite première position ; et
comprenant, en outre, un mécanisme de verrouillage (291) destiné à maintenir ladite liaison (275) dans ladite deuxième position après l'actionnement dudit déclencheur (18) ; et
comprenant, en outre, un mécanisme de désengagement destiné à libérer ledit mécanisme de verrouillage (291) après le soudage dudit ruban autour desdits articles, de telle sorte que ladite liaison (275) pivote vers ladite première position amenant ledit deuxième barreau (279) à déplacer ladite mâchoire (24) déplaçable vers ladite position d'ouverture.

11. Outil selon la revendication 1, dans lequel ladite pointe de soudage (78) peut se déplacer entre un premier emplacement dans lequel ladite pointe de soudage (78) est placée de manière à souder ledit ruban, assujettissant, ainsi, ledit ruban autour desdits articles allongés, et un deuxième emplacement dans lequel ladite pointe de soudage (78) est déplacée d'une certaine distance à partir dudit premier emplacement, et placée de manière à effectuer une découpe dudit ruban et un soudage par adhésivité de l'extrémité découpée résultante au ruban sous-jacent de ladite boucle.

12. Outil selon la revendication 11, dans lequel ladite corne à ultrasons (76) est montée à rotation sur ledit boîtier (12) de telle sorte que ladite pointe de soudage (78) peut tourner entre lesdits premier et deuxième emplacements.

13. Outil selon la revendication 12, dans lequel ladite corne à ultrasons (76) peut tourner autour d'un point déplacé verticalement par rapport à un axe s'étendant à travers ladite pointe de soudage (78), de telle sorte que la rotation de ladite pointe de soudage (78) autour dudit point produise un mouvement sensiblement vertical par rapport à ladite enclume (80).

14. Outil selon la revendication 1, comprenant, en outre, une alimentation électrique et un mécanisme de régalage destinés à alimenter et à faire fonctionner ledit outil.
